# EUROPÄISCHE PATENTSCHRIFT

(11) **EP 1 799 431 B1**
(45) Veröffentlichungstag und Bekanntmachung des Hinweises auf die Patenterteilung: **02.10.2013**
(21) Anmeldenummer: 05779468.7
(22) Anmeldetag: 31.08.2005
(51) Int. Cl.: B29C 51/26, B29C 51/32

(54) **PRESSVERFORM-WERKZEUG SOWIE VERFAHREN ZUR HERSTELLUNG EINES BAUTEILS DURCH PRESSVERFORMUNG**
PRESS MOLDING TOOL AND METHOD FOR PRODUCTION OF A COMPONENT BY PRESS MOLDING
OUTIL POUR MOULER UN OUTIL ET PROCEDE DE PRODUCTION D'UN COMPOSANT PAR MOULAGE PAR PRESSE

(30) Priorität: 18.09.2004 DE 102004045398; 18.09.2004 DE 102004045400; 18.09.2004 DE 102004045399
(43) Veröffentlichungstag der Anmeldung: 27.06.2007
(73) Patentinhaber: Faurecia Innenraum Systeme GmbH, 76767 Hagenbach (DE)
(72) Erfinder: SCHILLES, Wilfried, 76870 Kandel (DE)
(74) Vertreter: Schatt, Markus F.
(86) Internationale Anmeldenummer: PCT/DE2005/001523
(87) Internationale Veröffentlichungsnummer: WO 2006/029588

(56) Entgegenhaltungen:
- GB-A- 1 440 935
- GB-A- 1 505 255
- JP-A- 51 102 059
- US-A- 6 136 415

## Beschreibung

Die Erfindung betrifft ein Pressverform-Werkzeug sowie ein Verfahren zur Herstellung eines Bauteils durch Pressverformung.

Aus der GB-A-1 440 935 ist ein Verfahren zur Herstellung eines Bauteils durch PressVerformung zweier Material-Schichten bekannt, die von drei Spannrahmenelementen gehalten werden, während die Werkzeugteile relativ zueinander unter Verformgung der ersten und der zweiten Schicht im Bereich der Verformungskonturen der Werkzeugteile zusammengefahren werden. Anschließend werden die Werkzeugteile und die Spannreahmen-Elemente auseinandergefahren, um die miteinander verbundene erste und zweite Schicht aus dem Werkzeug herausnehmen zu können.

Aus der US-A-6 136 415 ist eine Vorrichtung zur Herstellung eines Bauteils aus zwei Schichten mittels zwei Werkzeugteilen bekannt, die jeweils eine dreidimensionale Verformungskontur aufweisen. Die Werkzeugteile sind in einem Druck-Geber eingespannt, um diese relativ zueinander zu verfahren. Weiterhin werden drei Spannrahmen-Elemente verwendet, um die Schichten während des Verformungsvorganges außerhalb des Konturbereichs des Werkzeugs in vorbestimmter Weise zu halten.

Eine der beiden Schichten kann insbesondere eine Träger-Schicht und die andere der beiden Schichten kann insbesondere eine Dekorations-Schicht sein.

Zur Herstellung derartiger Bauteile ist aus dem Stand der Technik bekannt, ein Oberwerkzeug und ein Unterwerkzeug zu verwenden, um eine Träger-Schicht und eine Dekorations-Schicht durch Zusammenpressen in eine vorbestimmte Bauteilform zu verformen und miteinander zu verbinden. Bei der Verformung der Schichten in eine Bauteil-Form mit einer dreidimensionalen Verwölbung oder Kontur, besteht das Problem, dass die Materialien dazu neigen, Falten zu werfen, wenn das Oberwerkzeug und das Unterwerkzeug zusammengefahren werden. Diese Falten werden dann dauerhaft in die Materialien eingepresst und führen zur Unbrauchbarkeit des hergestellten Bauteils. Aus diesem Grund wird ein Spannrahmen verwendet, mit der das Dekomaterial oder die Matte eingeklemmt und einer vorbestimmten Weise gehalten wird, um eine Bildung von Faltenwurf am Bauteil im Bereich zwischen dem Unterwerkzeug und dem Oberwerkzeug zu verhindern.

Bei den gattungsgemäßen Vorrichtungen bzw. bei derartigen einstufigen Herstellungsprozessen werden die Träger-Schicht in Form einer aufgeheizten Matte und die Dekorations-Schicht aufeinander gelegt, bevor sie von Unterwerkzeug und Oberwerkzeug geformt oder von einem gegebenenfalls verwendeten Spannrahmen aneinander gedrückt werden. Bei den Vorrichtungen des Stands der Technik entsteht dabei das weitere Problem, dass sich die zu verformenden und miteinander zu verbindenden Schichten abschnittsweise miteinander verkleben können, wodurch die Schichten dann partiell miteinander verbunden sind. Bei einem späteren Beschnitt von Dekorations-Schicht und Träger-Schicht, bei der ein Überstand der Dekorations-Schicht erreicht werden soll, ist eine Trennung der Schichten abschnittsweise nicht mehr möglich, so dass das Bauteil nicht brauchbar für ein späteres Umbugen der Dekorations-Schicht ist. Gegebenenfalls ist eine aufwendige Nacharbeit erforderlich, um das Bauteil für den vorgesehenen Verwendungszweck tauglich und insbesondere Umbug-tauglich zu machen.

Die Aufgabe der Erfindung ist, ein Verfahren und eine Vorrichtung bereitzustellen, mit dem bzw. mit der eine bessere Qualität der Oberfläche des herzustellenden Bauteils und der technischen Eigenschaften der Träger-Schicht mit großer Zuverlässigkeit erreicht wird.

Diese Aufgabe wird durch die Merkmale der unabhängigen Patentansprüche gelöst. Weitere erfindungsgemäße Ausführungsformen sind in den auf diese rückbezogenen Unteransprüchen beschrieben.

Durch die erfindungsgemäße Lösung sind Bauteile herstellbar, die eine Träger-Schicht mit gleichmäßiger Dicke aufweist, so dass die technischen Eigenschaften des gesamten Bauteils mit großer Zuverlässigkeit verbessert wird.

Bei der auftretenden Verwölbung der Dekorations-Schicht und Träger-Schicht beim Zusammenfahren des Unter-Werkzeugs und des Ober-Werkzeugs entsteht durch die unterschiedlichen Längen der Abwicklung der Konturlinien der Schichten auf den Konturflächen von Unter-Werkzeug und Ober-Werkzeug aus einem vorzugsweise ebenen Ausgangs-Zustand heraus eine Spannung in den Schichten. Diese wird erfindungsgemäß dadurch kompensiert, dass die Schichten von außen in den Werkzeug-Bereich definiert sowie weitgehend Spannungs- und Falten-frei nachfließen können.

Durch die erfindungsgemäße Vorrichtung wird erreicht, dass die außerhalb des konturgebenden Bereichs des Werkzeugs im Spannrahmen-Bereich liegenden Schichten vor der Bildung des Randlinien-Beschnitts nicht miteinander verbunden werden. Dadurch bleiben Umbug-Bereiche sicher voneinander getrennt, bevor die Schichten derart abzuscheiden sind, dass einen Stoff-Überstand gegenüber der Randlinie der Träger-Schicht für die in einem späteren Schritt gegebenenfalls vorgesehene Bildung eines Umbugs erreicht wird.

Im folgenden wird die Erfindung anhand der beiliegenden Figuren beschrieben, die zeigen:
- Figur 1 eine Ausführungsform der erfindungsgemäßen Herstellungs-Vorrichtung in einer ersten oder Grund-Stellung, in der sich das Formwerkzeug in einer offenen Stellung befindet und ein erstes und ein zweites Spannrahmen-Element von drei Spannrahmen-Elementen auseinandergefahren sind;
- Figur 2 die Ausführungsform der erfindungsgemäßen Herstellungs-Vorrichtung nach der Figur 1 in einem Zustand, in dem eine erste Schicht aufgenommen wird;
- Figur 3 die Ausführungsform der erfindungsgemäßen Herstellungs-Vorrichtung nach der Figur 1 mit einer zweiten Stellung der Spannrahmen-Elemente, in der die erste Schicht von dem ersten und dem dritten Spannrahmen-Element gehalten wird;
- Figur 4 die Ausführungsform der erfindungsgemäßen Herstellungs-Vorrichtung nach der Figur 1 in einem Zustand, in dem weiterhin eine zweite Schicht aufgenommen wird;
- Figur 5 die Ausführungsform der erfindungsgemäßen Herstellungs-Vorrichtung nach der Figur 1 mit einer ersten Werkzeug-Zwischenstellung und einer dritten Stellung der Spannrahmen-Elemente;
- Figur 6 die Ausführungsform der erfindungsgemäßen Herstellungs-Vorrichtung nach der Figur 1 mit einer zweiten Werkzeug-Zwischenstellung und einer vierten Stellung der Spannrahmen-Elemente;
- Figur 7 die Ausführungsform der erfindungsgemäßen Herstellungs-Vorrichtung nach der Figur 1 mit einer Werkzeug-Schließstellung und einer fünften Stellung der Spannrahmen-Elemente;
- Figur 8 die Ausführungsform der erfindungsgemäßen Herstellungs-Vorrichtung nach der Figur 1 mit einer sechsten Stellung der Spannrahmen-Elemente;

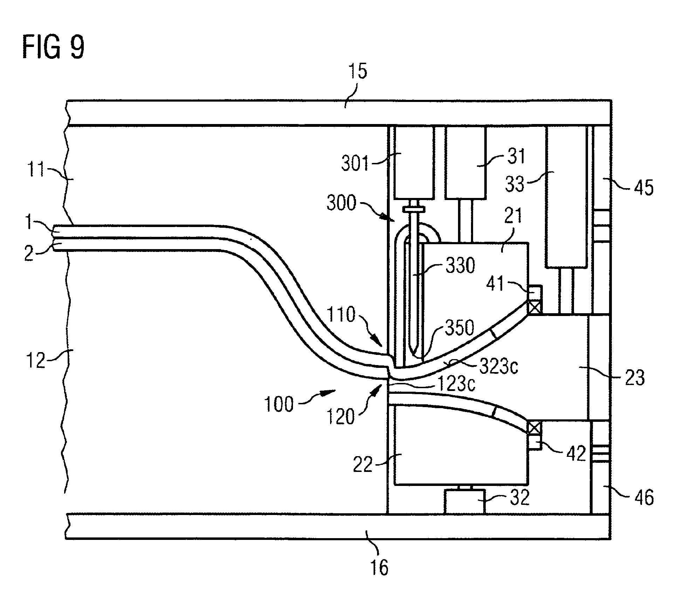

- Figur 9 die Ausführungsform der erfindungsgemäßen Herstellungs-Vorrichtung nach der Figur 1 mit einer ersten Schneid-Vorrichtung als Bestandteil der zweiten Spannrahmen-Elements in einem Zustand, in dem ein Überstand der zweiten Schicht abgeschnitten ist, sowie einer weiteren, an dem ersten Spannrahmen-Element angeordneten Schneid-Vorrichtung in einem Zustand, in dem ein Überstand der zweiten Schicht abgeschnitten ist;
- Figur 10 die Ausführungsform der erfindungsgemäßen Herstellungs-Vorrichtung nach der Figur 1 mit einer weiteren, an dem dritten Spannrahmen-Element angeordneten Schneid-Vorrichtung in einem Zustand vor dem Schneid-Vorgang;
- Figur 11 die Ausführungsform der erfindungsgemäßen Herstellungs-Vorrichtung nach der Figur 1 mit einer weiteren, an dem dritten Spannrahmen-Element angeordneten Schneid-Vorrichtung in einem Zustand nach dem Schneid-Vorgang.

Das erfindungsgemäße Verfahren bzw. die erfindungsgemäße Vorrichtung betrifft die Herstellung eines Bauteils aus zumindest einer ersten Schicht, z.B. einer Dekorations-Schicht, und einer zweiten Schicht, z.B. einer Träger-Schicht, bei dem eine Verformung der ersten und der zweiten Schicht sowie die Verbindung der beiden Schichten miteinander durch das Zusammenfahren eines ersten, der ersten Schicht zugewandten Werkzeugteils und eines zweiten, der zweiten Schicht zugewandten Werkzeugteils erfolgt. Generell können beide Schichten mehrschichtig sein, wobei auch mehrere Schichten der ersten oder der zweiten Schicht mit dem Verfahren bzw. der Vorrichtung nach der Erfindung verformt und miteinander verbunden werden können. In der nachfolgenden Beschreibung wird eine zur Anlage an den konturgebenden Bereich des ersten Werkzeugteils bestimmte ein- oder mehrschichtige Schicht als erste Schicht bezeichnet. Analog wird eine zur Anlage an den konturgebenden Bereich des zweiten Werkzeugteils bestimmte ein- oder mehrschichtige Schicht nachfolgend als zweite Schicht bezeichnet. Generell sind die erste und die zweite Schicht Schichten, die sich unter Druck miteinander verbinden, z.B. zumindest bereichsweise verschmelzen oder verkrallen lassen.

Vorzugsweise ist eine der beiden Schichten im herzustellenden Bauteil eine Dekorations-Schicht und die andere der beiden Schichten eine Träger-Schicht. Nachfolgend werden Ausführungsformen der Erfindung beschrieben, bei denen die erste Schicht eine Dekorations-Schicht und die zweite Schicht eine Träger-Schicht ist. Es ist jedoch auch möglich, dass umgekehrt die erste Schicht eine Träger-Schicht und die zweite Schicht eine Dekorations-Schicht ist. Auch muß nicht eine der beiden Schichten eine Dekorations-Schicht oder Träger-Schicht sein. Beispielsweise kann es sich bei der ersten und der zweiten Schicht um zwei Träger-Schichten oder zwei Zwischen-Schichten oder eine Träger-Schicht und eine Verstärkungs-Schicht, wie z.B. eine Schicht aus Glasfaser-Gewebe handeln.

Bei der Herstellung des Bauteils mit einer Träger-Schicht und einer Dekorations-Schicht müssen die einander zugewandten Seiten der Dekorations-Schicht und der Träger-Schicht miteinander durch von dem Werkzeug ausgeübten Druck und gegebenenfalls unter Anwendung von Wärme miteinander verbindbar sein. Dazu kann die der Träger-Schicht zugewandte Schicht der Dekorations-Schicht die Eigenschaft aufweisen, sich mit der Träger-Schicht unter Druck mechanisch zu verbinden, z.B. durch mechanische Verkrallung von an der genannten Seite der Dekorations-Schicht angebrachten Fäden oder Haaren mit der gegebenenfalls angeschmolzenen Oberfläche der Träger-Schicht. Dazu kann zumindest die der Träger-Schicht zugewandte Oberfläche der Dekorations-Schicht aus einem Gewebe gebildet sein, das z.B. ein Vlies, ein Filz, ein Flachgewebe, ein Rundstrick, sein kann. Eine Verbindung von Dekorations-Schicht mit der Träger-Schicht kann auch durch Verschmelzen der einander zugewandten Oberflächen unter Anwendung von Druck durch das Werkzeug und gegebenenfalls unter Anwendung von Wärme erfolgen. Ein Verschmelzen wird erreicht, wenn die Dekorations-Schicht Schaum-Bestandteile enthält, die zur gleichen Material-Familie gehören wie die zur Verschmelzung vorgesehene Träger-Schicht.

Als Dekorations-Schicht kann dabei ein textiles Gewebe, ein Schaum-Kunstleder, eine Kunststoff-Folie oder ein Leder verwendet werden. Bei der Verwendung eines textilen Gewebes als Dekorations-Schicht kann für das Ausgangsmaterial eine Schicht aus textilen Materialien oder Folien oder eine Kombination aus beiden oder eine Kombination der genannten Alternativen verwendet werden. Eine Dekorations-Schicht kann bei dem herzustellenden Bauteil auch dazu vorgesehen sein, die Haptik-Eigenschaften des Endprodukts auf der entsprechenden Seite des Bauteils zu optimieren. Dazu kann die Dekorations-Schicht auch Schaum-Bestandteile aufweisen. Beispielsweise kann die Dekorations-Schicht ein Verbund aus textilen Materialien, einem Schaum und einem Vlies-Material sein. Als Schaum kann ein PP-Schaum oder PE-Schaum oder ein auf PU aufbauender Schaum verwendet werden.

Als Träger-Schicht ist insbesondere ein Kunststoff und speziell eine Polypropylen (PP)-gebundene Fasermatte vorgesehen. Diese kann insbesondere durch Wärmezfuhr plastifizierbar sein. Die Träger-Schicht ist vorzugsweise aus einem Fasermaterial, vorzugsweise aus Naturfasern oder Glasfasern sowie aus Kunststoff-Fasern und insbesondere Polypropylen (PP)-Fasem gebildet. Die Naturfasern können aus Flachs oder Kenaf, Sisal, Leinen oder Baumwolle gebildet sein. In diesem Fall werden diese Fasern in einem vorbereitenden oder einem dem Verfahren vorangehenden Schritt zu einer Matte geformt. Anschließend werden unter Anwendung von Druck und Temperatur unter Aufschmelzung des Kunststoff-Anteiles ein miteinander verbundenes plastisches Matten-Material als eine erste oder zweite Schicht gebildet.

Nachfolgend wird die Erfindung an Hand einer Ausführungsform der Vorrichtung bzw. eines Herstellungsverfahrens zur Herstellung eines Bauteils bzw. eines Herstellungsverfahrens aus einer ersten und einer zweiten Schicht beschrieben, bei der die erste Schicht eine Dekorations-Schicht und die zweite Schicht eine Träger-Schicht ist.

Die erfindungsgemäße Vorrichtung zur Herstellung eines Bauteils aus zumindest einer ersten Schicht 1, in der beschriebenen Ausführungsform eine Dekorations-Schicht, und einer zweiten Schicht 2, in der beschriebenen Ausführungsform eine Träger-Schicht, weist eine die Kontur des herzustellenden Bauteils bestimmendes Formwerkzeug 10 mit zumindest einem ersten, der ersten Schicht zugewandten Werkzeugteil 11 mit einer dreidimensionalen Verformungskontur 13 und einem zweiten, der zweiten Schicht zugewandten Werkzeugteil 12 mit einer dreidimensionalen Verformungskontur 14 auf. Die Werkzeugteile 11, 12 werden von einem Druck-Geber (nicht dargestellt) zueinander bewegt, um die Verformung der ersten Schicht 1 bzw. der Dekorations-Schicht und der zweiten Schicht 2 bzw. der Träger-Schicht sowie die Verbindung der beiden Schichten 1, 2 miteinander durch das Zusammenfahren des ersten und des zweiten Werkzeugteils 11 bzw. 12 zu bewirken. Das erste Werkzeugteil 11 kann an einem ersten Werkzeughalter oder einer Montageplatte 15 und zweite Werkzeugteil 12 kann an einem zweiten Werkzeughalter oder einer Montageplatte 16 angebracht sein.

Die erfindungsgemäße Vorrichtung weist weiterhin eine Spannrahmen-Einrichtung 20 mit zueinander und gegenüber den Werkzeugteilen 11, 12 beweglichen Spannrahmen-Elementen auf, um die Schichten 1, 2 während des Verformungsvorganges außerhalb des Konturbereichs des Werkzeugs in vorbestimmter Weise zu halten. Diese umfasst ein erstes Spannrahmen-Element 21, das mittels einer ersten Stell-Einrichtung 31 relativ zum ersten Werkzeugteil 11 beweglich ist, ein zweites Spannrahmen-Element 22, das mittels einer zweiten Stell-Einrichtung 32 relativ zum zweiten Werkzeugteil 12 beweglich ist, ein drittes Spannrahmen-Element 23, das mittels einer dritten Stell-Einrichtung 33 relativ zum ersten Werkzeugteil 11 beweglich ist. Das dritte Spannrahmen-Element 23 ist zwischen dem ersten und dem zweiten Spannrahmen-Element 21 bzw. 22 angeordnet und zwischen diesen beweglich. Die Spannrahmen-Elemente 21, 22 und 23 werden inihrer Bewegungsrichtung über die Stell-Einrichtungen 31, 32, 33 und/oder über separate Führungen geführt.

Die erste, zweite und dritte Stell-Einrichtung 31, 32 bzw. 33 sind Einrichtungen, die von einer Steuerungs-Einrichtung zur automatischen oder gegebenenfalls zusätzlich über eine Betätigungs-Einrichtung zur manuellen oder halb-automatischen Steuerung des Herstellungs-Prozesses angesteuert werden, um die jeweiligen Spannrahmen-Elemente 21, 22, 23 zu bewegen. Die erste und die dritte Stell-Einrichtung 31 bzw. 33 sind vorzugsweise mit dem ersten Werkzeugteil 11 mechanisch gekoppelt, z.B. indem diese Stell-Einrichtungen 31 bzw. 33 wie auch der erste Werkzeugteil 11 auf einem ersten Werkzeughalter oder einer ersten Montageplatte 15 angeordnet sind. Die erste und die dritte Stell-Einrichtung 31 bzw. 33 können jedoch auch auf einem anderen Träger oder zwei anderen Trägern (nicht gezeigt) angebracht sein, so dass in diesem Fall deren Ausfahrstellung unabhängig von der Position des ersten Werkzeugteils 11 ist. Die zweite Stell-Einrichtung 32 ist vorzugsweise mit dem zweiten Werkzeugteil 12 mechanisch gekoppelt, z.B. indem diese auf einem zweiten Werkzeughalter oder einer zweiten Montageplatte 16 angebracht ist. Die zweite Stell-Einrichtung 32 kann jedoch auch auf einem von der Position des zweiten Werkzeugteils 12 unabhängigen Träger (nicht gezeigt) angeordnet sein, so dass in diesem Fall deren Ausfahrstellung unabhängig von der Position des zweiten Werkzeugteils 12 ist.

Das dritte Spannrahmen-Element 33 ist in der relativen Verschiebungsrichtung der Werkzeugteile 11, 12 gesehen zwischen dem ersten und dem zweiten Spannrahmen-Element 31 bzw. 32 dergestalt angeordnet, dass zwischen den einander zugewandten, zur Anlage der ersten bzw. zweiten Schicht vorgesehenen Konturen der jeweiligen Spannrahmen-Elemente zumindest abschnittsweise die erste bzw. zweite Schicht gelegen sein kann. Vorzugsweise ist vogesehen, dass sich das dritte Spannrahmen-Element 33 im Herstellungsprozeß zwischen den Stellungen des ersten und dem zweiten Spannrahmen-Elements bewegt.

Die Spannrahmen-Elemente sind jeweils außerhalb der konturgebenden Bereiche der Werkzeugteile 11, 12 angeordnet. Diese können einteilig gebildet sein und als die Werkzeugteile 11, 12 umlaufende Gebilde gestaltet sein. Die Spannrahmen-Elemente können auch entlang des Umfangs oder entlang eines Bereichs des Umfangs der Werkzeugteile 11, 12 mehrteilig gebildet sein. Auch kann ein Spannrahmen-Element aus zwei Teilen gebildet sein, die an Stellen außerhalb der Werkzeugteile 11, 12 angeordnet sind. Diese Stellen können insbesondere einander diametral gegenüber liegen. Auch können mehrere, z.B. drei oder vier Teile eines Spannrahmen-Elements außerhalb des Umfangs des jeweiligen Werkzeugteils 11 bzw. 12 oder der Werkzeugteile 11, 12 je nach Anwendungsfall regelmäßig oder unregelmäßig um diesen herum verteilt, angeordnet sein.

Die Spannrahmen-Elemente können unterschiedlich gebildet sein. Die Bauweise und Anordnung der Spannrahmen-Elemente richtet sich nach Art, Material und Gestalt des herzustellenen Bauteils bzw. nach Art, Material und Gestalt der Materialien.

Die Spannrahmen-Elemente 31, 32, 33 weisen jeweils einen Anlagebereich oder zwei Anlagebereiche auf, der bzw. die bei der Herstellung des Bauteils dazu vorgesehen ist bzw. sind, dass ein Überstand-Bereich der ersten bzw. zweiten Schicht an diesen bzw. diese anlegbar ist. Das erste Spannrahmen-Element 21 und das zweite Spannrahmen-Element 22 weisen jeweils einen Anlagebereich auf, während das dritte Spannrahmen-Element 23 zwei Anlagebereiche aufweist. Der Anlagebereich 21a des ersten Spannrahmen-Elements 21 ist einem ersten Anlagebereich 23a des dritten Spannrahmen-Elements 23 zugewandt. Diese Anlagebereiche 21 a bzw. 23a sind jeweils derart gestaltet, dass ein Aufnehmen eines Überstandbereichs der zur Aufnahme vorgesehenen Schicht 1 bzw. 2 nach einem entsprechenden Zusammenfahren der Spannrahmen-Elemente 21 und 23 erreichbar ist. Das Aufnehmen kann ein Klemmen oder ein Haltens insbesondere mit der Möglichkeit eines Nachfliessens der Schichten 1, 2 oder eine Kombination dieser Funktionen beinhalten. Analoges gilt für einen weitere oder zweiten, am dritten Spannrahmen-Element 23 vorgesehenen Anlagebereich 23b und ein diesem zugewandten Anlagebereich 22a des zweiten Spannrahmen-Elementes 22: Diese Anlagebereiche 23b bzw. 22a sind jeweils ebenfalls derart gestaltet, dass ein Aufnehmen eines Überstandbereichs der zur Aufnahme vorgesehenen Schicht 2 bzw. 1 nach einem entsprechenden Zusammenfahren der Spannrahmen-Elemente 23 und 22 erreichbar ist.

Das dritte Spannrahmen-Element 23 ist erfindungsgemäß dazu vorgesehen, die außerhalb der Verformungskonturen 13, 14 der Werkzeugteile 11 bzw. 12 befindlichen Überstandsbereiche der zwei von den jeweiligen Spannrahmen-Elementen gehaltenen Schichten 1, 2 während der Schließbewegung der Werkzeugteile 11, 12 bzw. der Verformung der Schichten 1, 2 durch diese Werkzeugteile 11, 12 voneinander getrennt zu halten. Dadurch wird insbesondere ein Verkleben der Schichten 1, 2 außerhalb der Verformungskonturen 13, 14 vermieden. Auf diese Weise wird ein Nachfließen der Schichten, insbesondere auch in zueinander unterschiedlichem Maße ermöglicht. Außerdem kann nachfolgend ein Bearbeiten der Schichten und insbesondere das Beschneiden der Außenbereiche der Schichten unabhängig voneinander erfolgen. Je nach Anwenundungsfall kann insbesondre durch eine spezielle Beschichtung vorgesehen sein, dass ein Anlagebereich oder mehrere Anlagebereiche das Nachfliessen einer oder beider der Schichten 1, 2 hemmt bzw. hemmen.

Die einander zugewandten Anlagebereiche 21 a, 23a bzw. 23b, 22a müssen nicht zwingend zueinander parallel verlaufen. Die Anlagebereiche 21 a, 23a bzw. 23b, 22a können bereichsweise oder über die vollständige Fläche beschichtet oder mit entsprechenden Einsätzen versehen sein, um je nach Erfordernis ein Nachfließen der jeweils zwischen zwei Spannrahmen-Elementen gehaltenen Schicht 1 bzw. 2 erleichtert oder erschwert wird. Um ein Nachfließen einer Schicht 1 bzw. 2 zu erleichtern, können die jeweiligen Anlagebereiche oder auf dieser angeordnete Segmente z.B. Polytetrafluor-Ethylen (PTFE) - Bestandteile enthalten oder eine verhältnismäßig geringe Rauhtiefe aufweisen. Dazu können die jeweiligen Anlagebereiche oder auf dieser angeordnete Segmente auch eine metallische Beschichtung besitzen, die z.B. galvanisch aufgebracht wird. Um ein Nachfließen eine Schicht 1 bzw. 2 zu erschweren, können die jeweiligen Anlagebereiche reibungserhöhende Bestandteile oder Segmente enthalten. Hierzu kann auch eine geeignete Oberflächenstruktur vorgesehen sein.

Die jeweiligen zum Aufnehmen einer Schicht 1 bzw. 2 vorgesehenen Anlagebereiche 21 a, 23a bzw. 23b, 22a oder auf dieser angeordnete Segmente und/oder die Werkzeugteile 11 bzw. 12 können ganz oder bereichsweise mittels einer Temperierungs-Einrichtung temperierbar ausgeführt werden. Dabei können sämtliche Anlagebereiche 21 a, 23a bzw. 23b, 22a oder ein einzelner Anlagebereich oder nur zwei einander zugewandte Anlagebereiche oder auch nur ein Werkzeugteil 11 oder 12 ganz oder bereichsweise temperierbar sein. Die hierfür anordbare Temperierungs-Einrichtung ist derart gestaltet, dass mit dieser eine Temperatur des Anlagebereichs bzw. des Segments konstant oder Zeit- oder Prozess-abhängig einstellbar oder regelbar ist. Die Einstellung kann durch eine Steuerung auch mit Hilfe von Temperatur-Sensoren in dem jeweils zu temperierenden Anlagebereich bzw. Segment realisiert sein. Die alternative Regelung erfolgt auf der Basis der mittels Temperatur-Sensoren erfassten Temperaturen an dem jeweils zu temperierenden Anlagebereich bzw. Segment.

Durch die Temperierung zumindest eines Anlagebereichs bzw. Segments kann das Spiel von Führungen oder Passungen oder die Beabstandung beweglicher Teile optimiert und insbesondere verringert werden, da die Ausdehnungen beweglicher Teile bedingt durch die Temperatur-Veränderungen in vorbestimmten Grenzen einstellbar sind. Auf diese Weise kann die Werkzeug-Genauigkeit, die Betriebssicherheit und Zuverlässigkeit der Herstellungs-Vorrichtung verbessert werden.

Ein weiterer durch die Temperierung zumindest von Bereichen der Anlageflächen bzw. Segmente bzw. zumindest eines Spannrahmen-Elements der Spannrahmen-Einrichtung 20 bzw. eines oder mehrerer der Formwerkzeuge 10 erreichbarer Vorteil leigt darin, dass die Bildung von kondensiertem Wasser auf einer unterkühlten Werkzeug- oder Spannrahmen-Oberfläche verhindert werden kann. Auf diese Weise wird weiterhin verhindert, dass eine Abkühlung der Schichten erfolgt, durch die Verformbarkeit und Verbindbarkeit der Schichten miteinander erschwert und sogar verhindert wird.

Durch die genannte Temperierung ist ein Überhitzen von Bereichen der Anlageflächen bzw. Segmente verhinderbar. Ein derartiges Überhitzen würde insbesondere die Oberflächenstruktur des herzustellenden Bauteils negativ beeinflussen wodurch insbesondere ein gegebenenfalls wünschenswerter Bügel-Effekt wie z.B. eine Anblendung verhindert werden könnte. Deshalb ist es vorteilhaft, bei der Temperierung insbesondere auch durch einen Kühl-Mechanismus eine vorbestimmte Prozess-Temperatur vorzusehen.

Die Temperierung eines oder beider der Werkzeugteile 11, 12, die zusätzlich oder alternativ zur Temperierung von Spannrahmen-Elementen vorgesehen sein kann, kann mittels der vorgenannten Temperierungs-Einrichtung oder mittels einer weiteren Temperierungs-Einrichtung temperierbar sein. Dabei wird jeweils ein Bereich an der Verformungskontur 13 bzw. 14 temperiert, um das für die jeweilige Schicht 1 bzw. 2 verwendete Material in einem vorteilhaft bearbeitbaren Zustand zu bringen oder zu erhalten. Ein weiterer Vorteil ist, dass durch die Temperierung von Teilen der Herstellungs-Vorrichtung eine optimierte Auslegung oder Arbeitsweise derselben erfolgen kann.

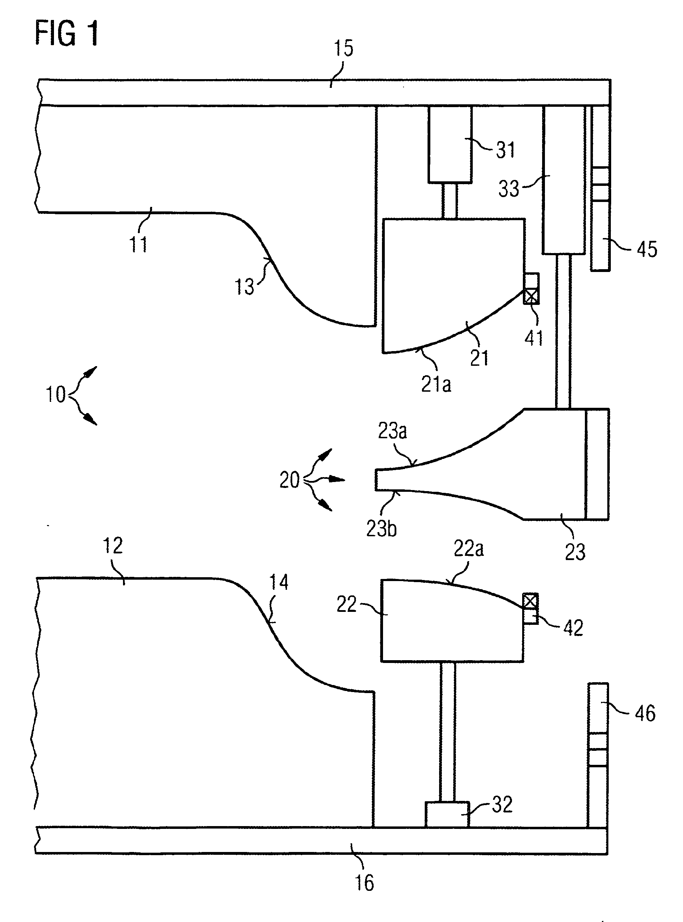

Die Werkzeugteile 11, 12 sind mittels einer Werkzeug-Zustelleinrichtung (nicht dargestellt) zueinander zwischen zwei Stellungen beweglich. Auch ist jedes Spannrahmen-Element 21, 22, 23 mittels jeweils einer entsprechend zugeordneten Stell-Einrichtung 31, 32 bzw. 33 selbstständig beweglich. Durch die mechanische Verbindung mit den Werkzeugen 11, 12 kann die Häufigkeit der erforderlichen Betätigungen der Stell-Einrichtungen verringert werden. Dabei besitzt jedes Spannrahmen-Element 21, 22, 23 zumindest einen Bewegungsbereich, der für die Anwendung der Herstellungs-Vorrichtung zur Herstellung eines Bauteils erforderlich ist. Das dritte Spannrahmen-Element 23 ist zwischen den ausgefahrenen Sellungen des ersten und des zweiten Spannrahmen-Elements 21, 22 (Figur 1) beweglich. Die Stellungen, zwischen denen die Spannrahmen-Elemente beweglich sind, sowie die Stellungen, zwischen denen gleichzeitig die Werkzeugteile beweglich sind, sind derart vorgesehen, dass ein Einlegen der ersten und der zweiten Schicht 1, 2 sowie ein Verformen und Anpressen möglich ist, während gleichzeitig die außerhalb der Verformungskonturen 13, 14 gelegenen Überstand- oder Randbereiche der Schichten 1, 2 auf eine Weise festgehalten werden, dass im Verlauf des Zusammenfahrens der Werkzeugteile 11, 12 zeitweise ein Nachfliessen einer oder beider der Schichten ermöglicht wird.

Die Zustelleinrichtung des dritten Spannrahmen-Elements 23 kann z.B. über den ersten Werkzeughalter 15 an das erste Werkzeugteil 11 oder alternativ z.B. über den zweiten Werkzeughalter 16 an das zweite Werkzeugteil 12 gekoppelt sein.

Die Ausfahrstellungen der Zustelleinrichtungen für die Werkzeugteile oder die Spannrahmen-Elemente können miteinander gekoppelt oder unabhängig voneinander sein. In der dargestellten Ausführungsform der Herstellungs-Vorrichtung ist das erste Werkzeugteil 11 zusammen mit einem Ende der ersten Zustelleinrichtung 31 und der dritten Zustelleinrichtung 33 an dem ersten Werkzeughalter 15 und das zweite Werkzeugteil 12 zusammen mit einem Ende der zweiten Zustelleinrichtung 32 an dem zweiten Werkzeughalter 16 angeordnet. Alternativ kann das dritte Spannrahmen-Element 23 auch an dem zweiten Werkzeughalter 16 angeordnet sein. Alternativ kann eine teilweise oder vollständige Unabhängigkeit der Ausfahrstellungen realisiert sein, z.B. indem die Zustelleinrichtung für das Werkzeug und die Zustelleinrichtung für ein diesem zugeordneten Spannrahmen-Element mechanisch voneinander unabhängig angeordnet oder montiert sind.

Die im Herstellungsverfahren benötigten Stellungen der Zustelleinrichtungen können mittels Sensoren und einem Vergleich der jeweiligen Soll- und Ist-Position in einer entsprechenden Steuerungs-Einrichtung erreicht werden. Dabei kann vorgesehen sein, dass die Sensoren die Position eines entsprechenden Betätigungselements in der jeweiligen Zustelleinrichtung oder die Position des jeweiligen Spannrahmen-Elements bzw. Werkzeugteils selbst erfassen.

In der Ausführungsform der Herstellungs-Vorrichtung nach den Figuren 1ff. werden die für das erfindungsgemäße Verfahren vorgesehenen Einfahr- und Ausfahrstellungen der Spannrahmen-Elemente
- über mechanische Begrenzungs-Elemente zusammen mit der mechanischen Kopplung der Ausfahrstellungen der Spannrahmen-Zustelleinrichtungen mit der Stellung des jeweils zugeordneten Werkzeugteils,
- durch vorzugsweise mechanisch definierte maximale Einfahr- und AusfahrStellungen der drei Spannrahmen-Elemente zusammen mit einem zusätzlichen Begrenzungs-Element für eine Zwischenstellung des dritten Spannrahmen-Elements sowie
- eine Auslegung der dritten Zustelleinrichtung gegenüber der ersten und zweiten Zustelleinrichtung hinsichtlich der durch diese jeweils ausgeübten Stellkraft
erreicht. Bei dieser Ausführungsform braucht jede Stell-Einrichtung gesteuert über eine zugeordnete Steuerungs-Einrichtung nur in einer vorbestimmten Reihenfolge zwischen zwei Endstellungen hin- und hergefahren zu werden, um die für das erfindungsgemäße Herstellungsverfahren bestimmungsgemäße Funktion zu erfüllen. Durch die Einsparung von Senoren und einer Steuerung auf der Basis eines Soll-Ist-Vergleichs für die jeweiligen Ausfahrstellung jeder Zustelleinrichtung ist diese Ausführungsform der Herstellungs-Vorrichtung kostengünstig.

Hierfür sind in der dargestellten Ausführungsform zwei Abstandhalter 41, 42 und zwei längenveränderliche Distanzierungs-Elemente 45, 46 vorgesehen. Die Abstandhalter 41, 42 sind vorgesehen, um jeweils benachbarte Spannrahmen-Elemente 21, 23 bzw. 23, 22 auf einen definierten Abstand relativ zueinander bewegen und auf einen zumindest zu einem bestimmten Zeitpunkt minimalen Abstand voneinander begrenzen zu können. Zu diesem Zweck können an entsprechenden Spannrahmen-Elementen 21, 22, 23 starre oder in Richtung der Bewegungen oder entsprechende Relativbewegungen der Spannrahmen-Elemente höhen- oder längenveränderliche Abstandhalter angeordnet sein. Bei der Verwendung in Bezug auf die Bewegungen der Spannrahmen-Elemente fixierter, also nicht höhenveränderlicher Abstandhalter wird durch das Zusammenfahren der jeweiligen Spannrahmen-Elemente zwischen diesen ein während des Herstellungsverfahrens konstanter Mindestabstand erreicht. Bei der Verwendung höhenveränderlicher Abstandhalter werden die durch die Anschlagelemente definierten Stellungen der Spannrahmen-Elemente durch deren entsprechenden Bewegung angefahren. Im weiteren Verlauf des Verfahrens werden die Abstandhalter in vorbestimmter Weise in ihrer Höhe verändert, so dass sich auch der Abstand der Spannrahmen-Elemente relativ zueinander verändert. Dies kann aufgrund der Schließbewegung der Werkzeugteile und/oder gekoppelt an der Ausfahr-Stellung der jeweiligen Stell-Einrichtung verändert werden. Durch die Abstand-Änderung wird das Nachfließ- und Klemm-Verhalten der Spannrahmen-Elemente in bezug auf die jeweils aufgenommenen Schichten 1, 2 verändert. Dadurch wird erreicht, dass in jeder Stellung der Werkzeugteile ein Nachfließen der von den jeweiligen Spannrahmen-Elementen aufgenommenen Schichten 1 bzw. 2, soweit dies durch die von den Werkzeugteilen 11, 12 bereitgestellte Verformungskontur benötigt wird, gewährleistet ist, um das Bauteil in der vorgesehenen Gestalt, Dicke, Festigkeit faltenfrei herzustellen.

In der Figur 1 ist ein Abstandhalter 41 und ein Abstandhalter 42 dargestellt. Der Abstandhalter 41 ist auf derjenigen Seite des ersten Spannrahmen-Elements 21 angebracht, die dem dritten Spannrahmen-Element 23 zugewandt ist und den Mindestabstand zwischen dem ersten und dem dritten Spannrahmen-Element festlegt. Der Abstandhalter 42 ist auf derjenigen Seite des zweiten Spannrahmen-Elements 22 angebracht, die dem dritten Spannrahmen-Element 23 zugewandt ist und den Mindestabstand zwischen dem zweiten und dem dritten Spannrahmen-Element festlegt. Ebenso könnte der Abstandhalter 41 auf der dem ersten Spannrahmen-Element 21 zugewandten Seite des dritten Spannrahmen-Elements angeordnet sein. Analog könnte der Abstandhalter 42 auf der dem zweiten Spannrahmen-Element 22 zugewandten Seite des dritten Spannrahmen-Elements 23 angeordnet sein.

Bei einer Ausgestaltung der Abstandhalter als höhenveränderliche Abstandhalter sind diese über einen Stellantrieb ausfahrbar, der mit der Steuerungs-Einrichtung funktional verbunden ist, um die phasenweise erforderliche Beabstandung der jeweils zusammenwirkenden Spannrahmen-Elemente durch eine entsprechende momentane Ausfahrstellung des jeweiligen Abstandhalters zu bewirken. Neben einer solchen elektronisch gesteuerten Verstellung der Abstandhalter können diese alternativ auch hydraulisch oder über eine Steuerkurve gesteuert werden. Eine solche Steuerkurve für die Spannrahmen-Elemente berücksichtigt vorzugsweise die jeweiligen Stellungen der Werkzeugteile.

Zur Einstellung oder Begrenzung der im Verfahren jeweils zugelassenen Stellungen des dritten Spannrahmen-Elements 23 relativ zu den beiden anderen Spannrahmen-Elementen sowie zu den Werkzeugteilen 11, 12 ist in der Ausführungsform der erfindungsgemäßen Herstellungs-Vorrichtung nach der Figuren 1 ff. ein mit dem ersten Werkzeugteil 11 über den Werkzeughalter 15 gekoppeltes erstes Distanzierungs-Element 45 und ein mit dem zweiten Werkzeugteil 12 über den Werkzeughalter 16 gekoppeltes zweites Distanzierungs-Element 46 vorgesehen. Beide Distanzierungs-Elemente 45, 46 sind im Verlauf des Herstellungsverfahrens einstellbar oder über die Steuerungs-Einrichtung ausfahrbar bzw. deren Längen in vorbestmmter Weise veränderbar.

Zur Höhen- oder Längen-Verstellung der Stell-Einrichtungen 31, 32, 33 bzw. der Diostanzierungs-Elemente 45, 46 können diese unterschiedlich, und insbesondere als Zylinder-Kolben-Antrieb gestaltet sein, die von der Steuerungs-Einrichtung ansteuerbar sind.

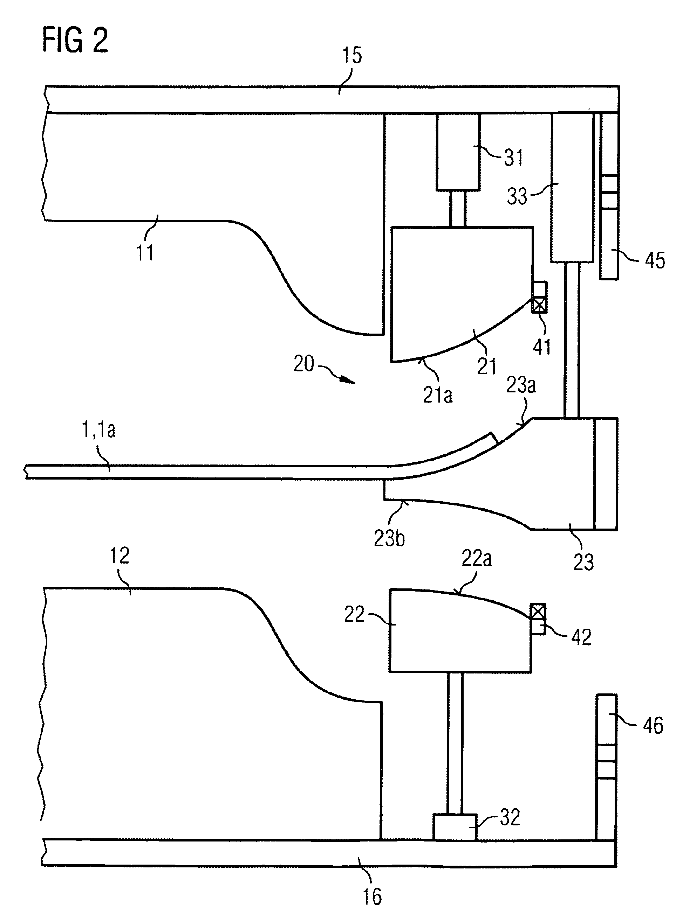

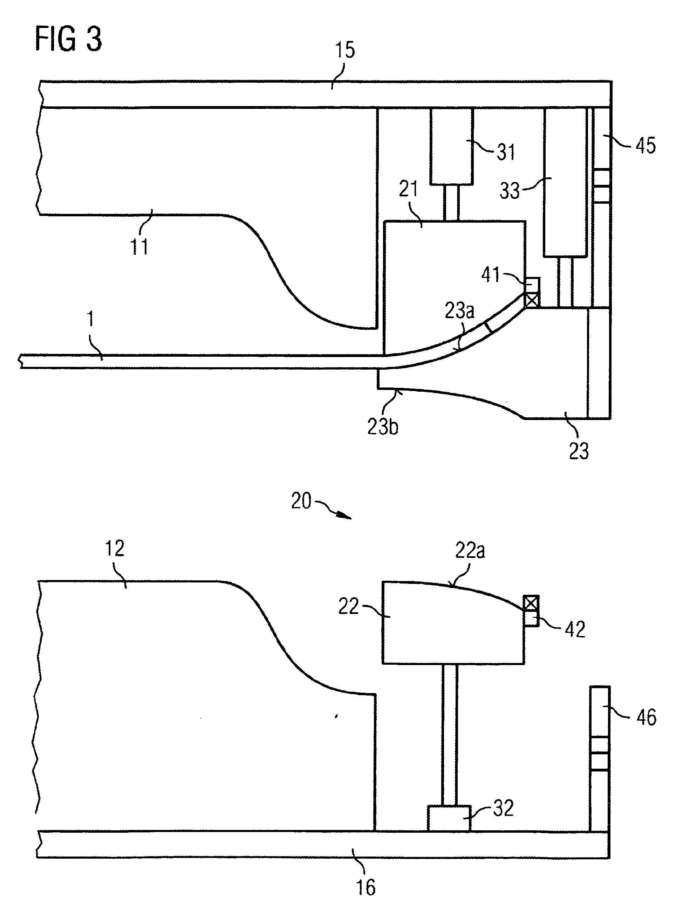

Das Zusammenwirken der Werkzeugteile und Spannrahmen-Elemente in Verbindung mit den Abstandhaltern und Distanzierungs-Elementen ist bei der Herstellungs-Vorrichtung nach den Figuren 1ff. wie folgt: Bei einer zueinander ausgefahrenen oder offenen Stellung der Werkzeugteile 11, 12 sind auch das erste 21 und das zweite 22 Spannrahmen-Element bzw. deren Zustelleinrichtungen 31, 32 einfahrbar. In diesem Zustand sind die Spannrahmen-Elemente 21, 22 in einer Ausgangsstellung oder ersten Stellung relativ weit auseinander gefahren (Figur 1) und ist das dritte Spannrahmen-Element 23 zwischen dem ersten 21 und dem zweiten Spannrahmen-Element 22 beweglich. Die ausgefahrene Stellung des dritten Spannrahmen-Elements 23 (Figur 1) erlaubt ein Einlegen der ersten Schicht 1 zwischen das erste 21 und das dritte 23 Spannrahmen-Element und ein Einlegen der zweiten Schicht 2 zwischen das zweite 22 und das dritte 23 Spannrahmen-Element. Vorzugsweise wird zunächst die erste Schicht 1 zwischen das erste 21 und das dritte 23 Spannrahmen-Element eingelegt, wobei sich das erste 21 und das dritte 23 Spannrahmen-Element noch in einer zueinander auseinandergefahrenen Stellung befinden (Figur 2). Bei dieser auseinandergefahrenen Stellung der Werkzeugteile 11, 12 ist die Beweglichkeit des dritten Spannrahmen-Elements begrenzt durch das erste Distanzierungs-Element 45 in eine erste Begrenzungs-Stellung. Diese erste Begrenzungs-Stellung des dritten Spannrahmen-Elements 23 ist Bestandteil einer zweiten Stellung der Spannrahmen-Elemente, in der die einander zugewandten Konturflächen des ersten Spannrahmen-Elements 21 und des dritten Spannrahmen-Elements 23 zueinander einen vorbestimmten Abstand einnehmen, bei dem die erste Schicht 1 zwischen dem ersten und dem dritten Spannrahmen-Element 21, 23 gehalten werden kann und je nach Anwendungsfall bei einer Aufnahme und Bewegung der ersten Schicht insbesondere aufgrund einer Bewegung eines oder beider der Werkzeugteile 11, 12 ein Nachfliessen oder Festhalten der ersten Schicht bewirkt wird. Bei der Ausführungsform der Vorrichtung der Figuren 1 bis 7 stützt sich in der ersten Stellung der Spannrahmen-Elemente das erste Spannrahmen-Element 21 über den ersten Abstandhalter 41 gegen das dritte Spannrahmen-Element 23 ab, um einen vorbestimmten Abstand zum dritten Spannrahmen-Element 23 einzunehmen (Figur 3). Die in dieser Situation durch den ersten Abstandhalter 41 definierte Höhe zwischen den Anlagebereichen des ersten und dritten Spannrahmen-Elements sind so beschaffen, dass die erste Schicht 1 in erfindungsgemäßer Weise gehalten wird. Dabei kann vorgesehen sein, das die erste Stell-Einrichtung 31 durch das Fahren der dritten Stell-Einrichtung 33 in eine entsprechende Richtung aufgrund des Zusammenwirkens des ersten und dritten Spannrahmen-Elements über den ersten Abstandhalter 41 ein Stück weit überdrückt, d.h. weiter eingefahren wird.

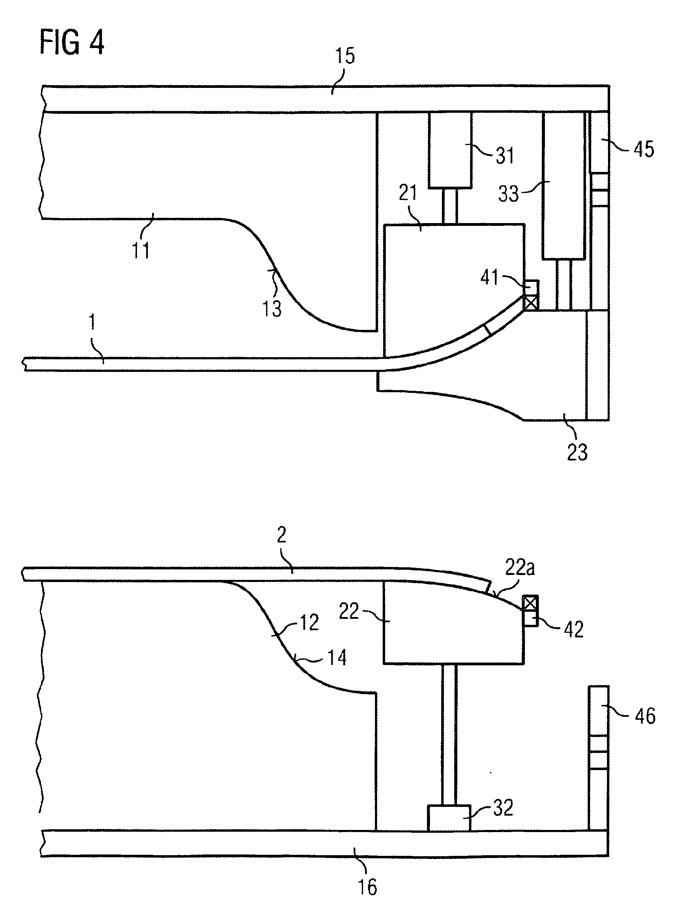

Vorzugsweise wird die zweite Schicht 2 in der ersten Begrenzungs-Stellung zwischen das zweite 22 und dritte 23 Spannrahmen-Element sowie zwischen die Werkzeugteile 11, 12 eingelegt (Figur 4). Die zweite Schicht 2 kann jedoch auch bereits in der offenen Stellung der Werkzeugteile 11, 12 eingelegt werden (Figur 2).

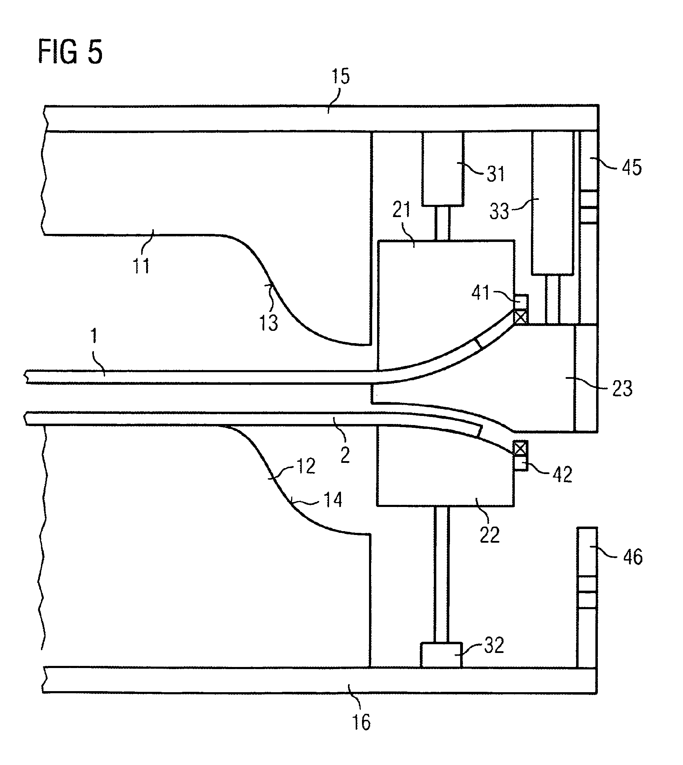

In diesem Zustand des ersten und dritten Spannrahmen-Elements 21 bzw. 23 (erste Begrenzungs-Stellung des dritten Spannrahmen-Elements) sind die Werkzeugteile 11, 12 von einer offenen in eine erste Werkzeug-Zwischenstellung fahrbar (Figur 5). Bei dieser ersten Zwischenstellung liegt in einer dritten Stellung der Spannrahmen-Elemente nehmen die einander zugewandten Anlagebereiche des ersten und dritten Spannrahmen-Elements gemäß der ersten Stellung nach Figur 3 sowie die einander zugewandten Anlagebereiche des zweiten und dritten Spannrahmen-Elements einen vorbestimmten Abstand ein, so dass die erste Schciht 1 wie auch die zweite Schicht 2 in erfindungsgemäßer Weise gehalten wird. Dieser Halte-Zustand kann je nach Anwendungsfall ein Hemmen oder Zulassen von Nachfließ-Bewegungen der ersten bzw. zweiten Schicht erlauben. In der Ausführungsform der Herstellungs-Vorrichtung nach den Figuren 1 bis 7 stützt sich das dritte Spannrahmen-Element 23 weiterhin über den ersten Abstandhalter 41 gegen das erste Spannrahmen-Element 21 und das zweite Spannrahmen-Element 22 über den zweiten Abstandhalter 42 zum dritten Spannrahmen-Element 23 ab. Die in dieser Situation durch den zweiten Abstandhalter 42 definierte Höhe zwischen den Anlagebereichen des zweiten und dritten Spannrahmen-Elements sind so beschaffen, dass die zweite Schicht 2 in erfindungsgemäßer Weise gehalten wird. Dabei ist das zweite Spannrahmen-Element 22 in Richtung zum ersten Spannrahmen-Element 21 ausgefahren. In dieser ausgefahrenen Stellung ist das zweite Spannrahmen-Element 22 vorzugsweise derart gelegen, dass dessen am nächsten in Richtung zum ersten Spannrahmen-Element 21 gelegener Konturpunkt in bezug auf die Bewegungsrichtung der Werkzeugteile 11, 12 im Bereich zwischen dem obersten und untersten Konturpunkt des zweiten Werkzeugteils 12, und je nach Anwendungsfall auch darüber hinaus in Richtung zum ersten Spannrahmen-Element 21 gelegen ist. Vorzugsweise sind dabei sowohl der am nächsten in Richtung zum ersten Werkzeugteil 11 gelegene Konturpunkt des ersten Spannrahmen-Elements 21 als auch der am nächsten in Richtung zum zweiten Werkzeugteil 12 gelegene Konturpunkt des zweiten Spannrahmen-Elements 22 zwischen dem am nächsten zum ersten Spannrahmen-Element 21 gelegenen Konturpunkt des ersten Werkzeugteils 11 und dem am nächsten zum zweiten Spannrahmen-Element 21 gelegenen Konturpunkt des zweiten Spannrahmen-Elements 22 gelegen.

In dieser ersten Werkzeug-Zwischenstellung muß diese Beweglichkeit der zweiten Stell-Einrichtung 32 soweit gewährleistet sein, dass das zweite Spannrahmen-Element 22 in eine Stellung beweglich ist, bei der der Anlagebereich 22a des zweiten Spannrahmen-Elements 22 in vorbestimmten Grenzen übergeht auf das Niveau der Verformungskontur 14 im Randbereich des zweiten Werkzeugteils 12, der dem zweiten Spannrahmen-Element 22 zugewandt ist. In diesem Zustand kann ein gegebenenfalls beabsichtigtes Nachfliessen der zweiten Schicht 2 beim weiteren Schliessen der Werkzeugsteile 11, 12 bis zur endgültigen Schließ-Stellung erfolgen. In der Realisierung der Herstellungs-Vorrichtung nach den Figuren 1 bis 7 ist der sich ergebende Bewegungsbereich des dritten Spannrahmen-Elements 23 sowie des zweiten Spannrahmen-Elements 22 begrenzt durch das zweite Distanzierungs-Element 46, da das dritte Spannrahmen-Element 23 zusammen mit dem ersten Spannrahmen-Element 21 mit der Schließ-Bewegung der Werkzeugteile 11, 12 soweit in Richtung zum zweiten Werkzeugteil 12 bewegt werden kann, bis dieses auf dem Distanzierungs-Element 46 als Begrenzungs-Element für die Bewegung des dritten Spannrahmen-Elements 23 aufliegt.

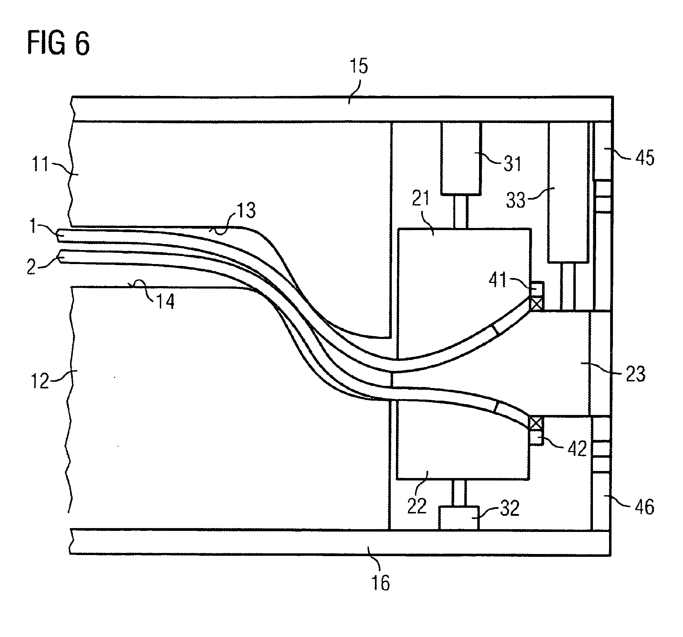

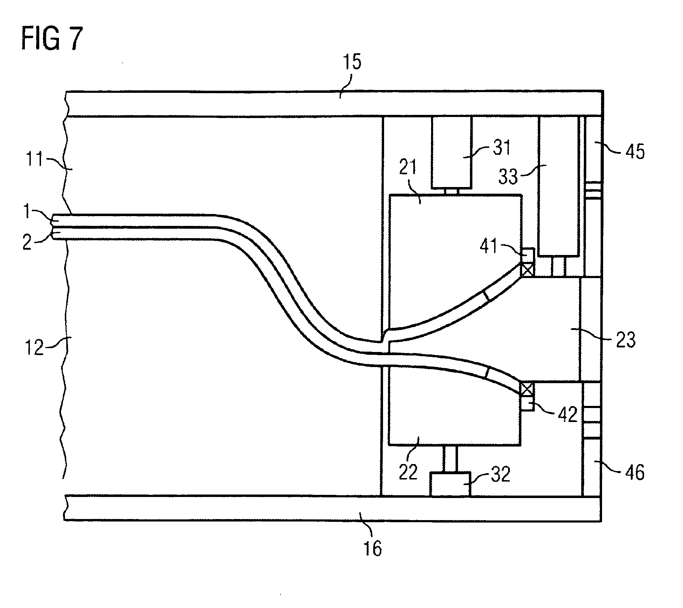

Ausgehend von dieser ersten Werkzeug-Zwischenstellung sind die Werkzeugteile 11, 12 über eine zweite Werkzeug-Zwischenstellung (Figur 6) in eine Schließ-Stellung oder Preß-Stellung oder Kaschier-Stellung (Figur 7) bewegbar.

In dieser zweiten Werkzeug-Zwischenstellung sind die Werkzeugteile 11, 12 gegenüber der ersten Werkzeug-Zwischenstellung weiter aufeinander zugefahren. Dabei sind die Spannrahmenelemente in einer vierten Stellung zueinander angeordnet. In dieser vierten Stellung nehmen wie in der dritten Stellung nach Figur 5 die einander zugewandten Anlagebereiche des ersten und dritten Spannrahmen-Elements sowie die einander zugewandten Anlagebereiche des zweiten und dritten Spannrahmen-Elements einen vorbestimmten Abstand ein, so dass die erste Schicht 1 wie auch die zweite Schicht 2 in erfindungsgemäßer Weise gehalten wird. Jedoch ist zusätzlich diese Anordnung aus dem ersten, zweiten und dritten Spannrahmen-Elementen 21, 22, 23 derart in Richtung zum zweiten Werkzeugteil 12 gefahren,
- dass der am nächsten in Richtung zum ersten Werkzeugteil 11 gelegene Konturpunkt des ersten Spannrahmen-Elements 21 als auch der am nächsten in Richtung zum zweiten Werkzeugteil 12 gelegene Konturpunkt des zweiten Spannrahmen-Elements 22 zwischen dem am nächsten zum ersten Spannrahmen-Element 21 gelegenen Konturpunkt des ersten Werkzeugteils 11 und dem am nächsten zum zweiten Spannrahmen-Element 21 gelegenen Konturpunkt des zweiten Spannrahmen-Elements 22 gelegen ist,
- dass vorzugsweise weiterhin der am nächsten in Richtung zum zweiten Werkzeugteil 12 gelegene Konturpunkt des zweiten Spannrahmen-Elements 22 innerhalb einer Abweichung auf der Höhe des am nächsten zum zweiten Spannrahmen-Element 22 gelegenen Konturpunkts des zweiten Spannrahmen-Elements 22 gelegen ist, wobei diese Abweichung gleich der zweifachen Dicke der zweiten Schicht 2 beträgt.

Bei der Vorrichtung bzw. dem Verfahren nach den Figuren 1 bis 7
- sind das erste und das dritte Spannrahmen-Element sowie dass zweite und das dritte Spannrahmen-Element voneinander durch die Abstandhalter 41 bzw. 42 getrennt, und
- ist das dritte Spannrahmen-Element in vorbestimmter Weise zwischen den Distanzierungs-Elemente 45, 46 gehalten, wobei sich das erste und das zweite Distanzierungs-Element 45 bzw. 46 in einer ausgefahrenen Stellung befinden,
so dass die drei Spannrahmen-Elemente 21, 22, 23, voneinander durch die Abstandhalter 41, 42 getrennt und zusammen mit der zwischen diesen gelegenen ersten und zweiten Schicht 1 bzw. 2 in einer Position ist, bei der der am nächsten in Richtung zum zweiten Werkzeugteil 12 gelegene Konturpunkt des zweiten Spannrahmen-Elements 22 innerhalb der vorgenannten Abweichung auf der Höhe des am nächsten zum zweiten Spannrahmen-Element 21 gelegenen Konturpunkts des zweiten Spannrahmen-Elements 22 gelegen ist.

Erfindungsgemäß erfolgt weiterhin ein weiteres Zusammenfahren der Werkzeugteile 11, 12 in ihre Schließ-Stellung durch die Stell-Einrichtung der Werkzeugteile 11, 12 sowie ein Fahren der Anordnung mit dem ersten, dem zweiten und dem dritten Spannrahmen-Element 21, 22, 23 in eine fünfte Stellung, bei der zusätzlich zu den Bestimmungselementen der vierten Stellung der Spannrahmen-Elemente
- der am nächsten in Richtung zum ersten Werkzeugteil 11 gelegene Konturpunkt des ersten Spannrahmen-Elements 21 innerhalb einer Abweichung auf der Höhe des am nächsten zum ersten Spannrahmen-Element 21 gelegenen Konturpunkts des ersten Spannrahmen-Elements 21 gelegen ist, wobei diese Abweichung vorzugsweise gleich der dreifachen Dicke der ersten Schicht 1 beträgt.

Die Schließ-Stellung der Werkzeugteile 11, 12 ist eine Stellung, bei der die erste Schicht 1 und die zweite Schicht 2 miteinander verbindbar sind und bei der gegebenenfallls der für eine solche Verbindung erfoderliche Druck aufbaubar ist.

Bei der fünften Stellung der Anordnung aus den drei Spannrahmen-Elementen 21, 22, 23 wird bei der in den Figuren dargestellten Ausführungsform die erste Stell-Einrichtung 31, die dritte Stell-Einrichtung 33 und das erste Distanzierungs-Element 45 überdrückt. Das bedeutet, dass bei dieser mechanischen Realisierung der Herstellungs-Vorrichtung die zweite Stell-Einrichtung 22 zuammen mit dem zweiten Distanzierungs-Element 46 in der Lage sind, die erste und dritte Stell-Einrichtung zuammen mit dem ersten Distanzierungs-Element 45 zu überdrücken.

Zusammenfassend ist die in den Figuren 1 bis 7 dargestellten Ausführungsform der Herstellungs-Vorrichtung wie folgt gestaltet: Die erste und dritte Stell-Einrichtung 31 bzw. 33 sowie das erste Distanzierungs-Element 45 sind gegebenenfalls über Zwischen-Elemente wie z.B. der erste Werkzeughalter 15 mechanisch mit dem ersten Werkzeugteil 11 verbunden oder an dessen Bewegung gekoppelt. Ebenso sind bei der dargestellten Ausführungsform die zweite Stell-Einrichtung 32 sowie das zweite Distanzierungs-Element 46 gegebenenfalls über Zwischen-Elemente, wie z.B. über den zweiten Werkzeughalter 16, mechanisch mit dem zweiten Werkzeugteil 12 verbunden oder an dessen Bewegung gekoppelt. Dabei wirken das erste und das zweite Distanzierungs-Element 45 bzw. 46 jeweils auf das dritte Spannrahmen-Element 23 und haben die Funktion, die Bewegung des dritten Spannrahmen-Elements 23 bzw. der dritten Stell-Einrichtung 33 in definierte Zwischenstellungen zu gewährleisten. Diese Zwischenstellungen können über eine mechanisch ausgeübte Sperrfunktion durch ein Blockieren der Ausfahrstellung der Distanzierungs-Elemente oder über einen Weg-gesteuerten Mechanismus erfolgen. Die erste und die zweite Stell-Einrichtung 31 bzw. 32 haben dabei eine Feder-Funktion mit vorzugsweise variabler Kraft, da die Verstellwege der Stell-Einrichtungen abhängig sind von dem Druck, der von der dritten Stell-Einrichtung 33 ausgübt werden. Zusätzlich können von den Distanzierungs-Elementen 45, 46 direkt oder über das dritte Spannrahmen-Element Kräfte auf das erste und/oder zweite Spannrahmen-Element ausgeübt werden.

Statt der beschriebenen Herstellungs-Vorrichtung kann diese auch teilweise oder ganz über elektronisch angesteuerte oder überwachte Stell-Einrichtungen betrieben werden, bei denen die Zwischen-Stellungen des dritten Spannrahmen-Elements über Sensoren oder Inkrementar-Geber und einer entsprechenden Steuerungs-Einrichtung erreichbar ist.

Bei der Realisierung mit der elektronischen Ansteuerung werden ausgehend von der zweiten Werkzeug-Zwischenstellung und bei dem weiteren Zusammenfahren der Werkzeugteile 11, 12 in ihre Schließ-Stellung die erste Stell-Einrichtung 31, die dritte Stell-Einrichtung 33 und das erste Distanzierungs-Element 45 nicht durch die Anordnung aus den drei Spannrahmen-Elementen 21, 22, 23 überdrückt. Vielmehr wird, um die genannten Stellungen der Werkzeugteile und der Spannrahmen-Elemente zu erreichen, die erste Stell-Einrichtung 31, die dritte Stell-Einrichtung 33 und das erste Distanzierungs-Element 45 über die elektronische Steuerung angesteuert in demselben Maße ein- oder zurückgefahren, wie das zweite Spannrahmen-Element 22 und das dritte Spannrahmen-Element 23 ausgefahren oder in dieselbe Richtung gefahren werden.

Bei der Realisierung mit der elektronischen Ansteuerung können weiterhin die Abstandhalter 41, 42 entfallen, da die Beabstandung des ersten von dem dritten Spannrahmen-Element sowie die Beabstandung des zweiten von dem dritten Spannrahmen-Element durch eine gesteuerte Weg-überwachte Stellbewegung der drei Spannrahmen-Elemente erreicht werden kann. In diesem Fall wird die Einstellung der Abstände zwischen den Spannrahmen-Elementen ebenfalls elektronisch gesteuert eingestellt bzw. geregelt.

Das dritte Spannrahmen-Element kann so gebildet sein, dass dieses eine Schicht oder mehrere Schichten aufnehmen kann, so dass dann mit der Herstellungs-Vorrichtung drei Schichten bzw. mehr als drei Schichten erfindungsgemäß miteinander verarbeitet werden können. Dabei können auch mehrere dritte Spannrahmen-Elemente jeweils mit einer eigenen dritten Stell-Einrichtung vorgesehen sein.

Erfindungsgemäß wird insbesondere gewährleistet, dass ein je nach Anwendungsfall vorzusehendes freies Nachfliessen der Schichten während der Übergänge in die verschiednenen Stellungen der Herstellungs-Vorrichtung ermöglicht wird:

Durch die Beabstandung des ersten von dem dritten Spannrahmen-Element sowie die Beabstandung des zweiten von dem dritten Spannrahmen-Element durch vorzugsweise einstellbarer Abstandshalter 41, 42 und alternativ oder zusätzlich durch eine gesteuerte und optional Weg-überwachte Stellbewegung der drei Spannrahmen-Elemente, die mittels der elektronischen Weg-Steuerung der Stell-Einrichtungen 31, 32, 33 bzw. Spannrahmen-Elemente 21, 22, 23 erfolgt, wird erreicht, dass die erste und/oder die zweite Schicht 1 bzw. 2 je nach dem Erfordernis des Anwendungsfalls beim Schließen des Formwerkzeugs mehr oder weniger nachfließen kann bzw. können. Dabei kann der eingestellte Abstand auch so vorgesehen sein, dass die Schichten 1, 2 geklemmt werden können, d.h. von den jeweiligen Spannrahmen-Eälementen festgehalten werden. Die jeweilige Einstellung kann je nach Anwendungsfall diese Extremzuständen realisieren oder Zustände zwischen diesen Extremzuständen realisieren.

Die in der Endphase des Zusammenfahrens der Werkzeugteile 11, 12 ab einer bestimmten Lage derselben zueinander vorzugsweise vorgesehene Anordnung des dritten Spannrahmen-Elements 23 in einem vom Anwendungsfall abhängigen Abstand relativ zum ersten und/oder zweiten Spannrahmen-Element bewirkt, dass die Schichten 1, 2 von den jeweiligen Spannrahmen-Elementen 21, 23 bzw. 22, 23 gehalten werden oder die Spannrahmen-Elemente ein definiertes Nachfließens der Schichten 1, 2 ermöglichen. Mit der Gewährleistung eines Nachfliessens einer oder mehrerer der Schichten wird erreicht, dass insbesondere bei der Verwendung von Werkzeuteilen mit dreidimesional verlaufenden Verformungs-Kounturen ein Faltenwurf im Bereich der späteren Bauteil-Kontur vermieden wird. Dabei kann die Haltekraft für die erste Schicht 1 bzw. die Freigiebigkeit im Sinne der Ermöglichung eines Nachfließens dieser Schicht 1 unterschiedlich gegenüber der auf die zweite Schicht 2 ausgeübten Haltekraft bzw. erlaubten Freigiebigkeit gewählt werden.

Die Funktion der ersten 31, der zweiten 32 und der dritten 33 Stell-Einrichtung ist, die Spannrahmen-Elemente 21, 22 bzw. 23 in vorbestimmte Positionen relativ zueinander sowie relativ zu den ihnen zugeordneten Werkzeugteilen 11, 12 zu fahren. Bei der in den Figuren dargestellten Ausführungsform der Herstellungs-Einrichtung führen die erste Stell-Einrichtung 31 und die zweite Stell-Einrichtung 32 nicht aktiv, d.h. nicht durch eigenen Antrieb eine Stell-Bewegung aus, sondern haben eine aufgrund des Andrückens durch das dritte Spannrahmen-Element 23 ausgübte Feder-Funktion. Die aktive Stell-Funktion wird bei der dargestellten Ausführungsform durch die Werkzeug-Stelleinrichtungen übernommen, da die Werkzeugteile 11, 12 über die Montageplatte oder den Werkzeughalter mit der ersten 31 bzw. der zweiten Stell-Einrichtung 32 mechanisch gekoppelt sind. Zwar ist auch die dritte Stell-Einrichtung 33 über die Montageplatte oder den Werkzeughalter mit einem der Werkzeugteile 11, 12 gekoppelt. Jedoch hat die dritte Stell-Einrichtung 33 die Funktion, das dritte Spannrahmen-Element 23 relativ zu dem ersten und dem zweiten Spannrahmen-Elememnt 21 bzw. 22 sowie reltaiv zu dem ersten 11 und dem zweiten 12 Werkzeugteil zu bewegen, so dass dessen aktive Stell-Funktion nicht von einer anderen Stell-Funktion der Herstellungs-Vorrichtung übernommen werden kann. Dennoch ist - auch bei der in den Figuren 1 bis 8 dargestellten Ausführungsform der Herstellungs-Vorrichtung - die erste Stell-Einrichtung 21 und die zweite Stell-Einrichtung 22 als eigenständige, auf der jeweiligen Monatageplatte montierte Stell-Einrichtung vorgesehen, um zu Beginn des Verfahrens die Spannrahmen-Elemente mit den Schichten bzw. Halbzeuge der Schichten beladen zu können. Dies kann jedoch bei der zweiten Stell-Einrichtung entfallen, wenn die erste und dritte Stell-Eimichtung eine Beweglichkeit zulässt, bei der das erste und das dritte Spannrahmen-Element in ihrem eingefahrenen oder Ausgangszustand entsprechend Freiraum für das Beladen oder Auflegen der Schichten in die Herstellungs-Vorrichtung bieten.

Um die optional vorgesehene, nachfolgend beschriebene Schneid-Vorrichtung zu betätigen, kann je nach Asführungsform derselben die erste und/oder die zweite Stell-Einrichtung auch gegenüber dem ersten bzw. zweiten Werkzeugteil oder deren zugehörigen Werkzeughalter aktiv beweglich oder steuerbar ausgebildet sein. Dadurch ist es möglich, die mit der optional vorgesehenen Schneid-Vorrichtung ausgeübte Schneidkraft auszuführen oder eine erforderliche unterstützende oder entlastende Kraft für den Schneidvorgang aufzubringen.

Die eigenständige aktive Bewegbarkeit der ersten und/oder der zweiten Stell-Einrichtung auch gegenüber dem ersten 11 bzw. zweiten 12 Werkzeugteil oder deren zugehörigen Werkzeughalter mit der ohnehin vorgesehenen aktiven Beweglichkeit des dritten Spannrahmen-Elements 23 ist auch vorteilhaft in bezug auf eine Entnahme des hergestellten Bauteils und gegebenenfalls angefallener Reste oder abgeschnittener Reste oder Überstände der Schichten.

Generell kann ein Bewerkstelligen der ersten und/oder der zweiten Stellung der Spannrahmen-Elemente auch entfallen und direkt die dritte Stellung der Spannrahmen-Elemente angefahren werden.

Die erfindungsgemäße Herstellungs-Vorrichtung kann optional eine oder mehrere Schneid-Vorrichtungen aufweisen, die gegebenenfalls in der Schließ-Stellung der Werkzeugteile 11, 12 aktiviert werden können, um eine oder mehrere der Schichten 1, 2 zuzuschneiden oder zu beschneiden. Dabei kann ein Schneiden abschnittsweise am Umfang der Verformungs-Konturen oder über den gesamten Umfang vorgesehen sein. Auch kann mittels der Schneid-Vorrichtung ein Überstand der ersten und / oder der zweiten Schicht abgeschnitten werden. Auch kann dabei ein Umbug-Überstand für eine oder beide Schichten durch den Schneid-Vorgang gebildet werden, wenn durch das Abschneiden oder Verkürzen einer Schicht 1, 2 gegenüber einer anderen Schicht 2 bzw. 1 die jeweils andere Schicht 2 bzw. 1 gegenüber der weiter abgeschnittenen Schicht übersteht. Der sich dadurch egebende Überstand kann in einem weiteren Verfahrensschritt zu einem Umbug z.B. um die kürzere Schicht verarbeitet werden. Bei der erfindungsgemäßen Vorrichtung ist eine einzelne Schicht beschneidbar, da die Schichten außerhalb der Verformungskonturen 13, 14 durch die dritte Spannrahmen-Einrichtung 23 getrennt voneinander gehalten werden. Die Schneid-Einrichtung kann an dem ersten Spannrahmen-Element und/oder dem dritten Spannrahmen-Element zum Abschneiden eines zwischen dem ersten und dem zweiten Werkzeugteil heraustretenden Überstandes der einer Schicht oder mehrerer Schichten angeordnet sein. Die optional vorgesehene Schneid-Einrichtung kann auf verschiedene Weisen realisiert sein:

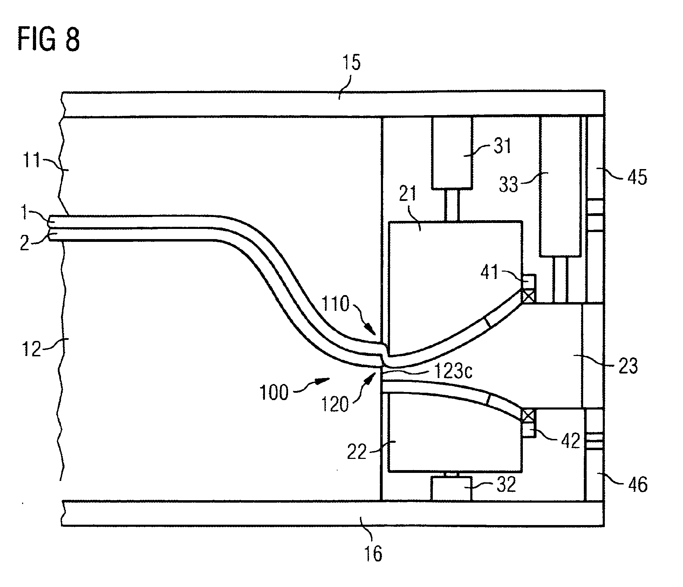

Im folgenden wird zunächst eine erste Schneid-Einrichtung 100 beschrieben, die in Richtung der Stell-Bewegung des dritten Spannrahmen-Elements 23 zur Aufnahme der ersten oder zweiten Schicht 1, 2 betätigbar ist. Die erste Schneid-Einrichtung 100 ist Bestandteil des dritten Spannrahmen-Elements 23 und zumindest eines Werkzeugteils 11, 12, wobei der Schneid-Vorgang mittels eines Fahrens in vorbestimmte Vorrichtungs-Stellungen erfolgt. Figur 8 zeigt die Herstellungs-Vorrichtung mit einer sechsten Stellung der Spannrahmen-Elemente, in der das dritte Spannrahmen-Element die Schneid-Bewegung ausgeführt hat.

Dazu weist das dritte Spannrahmen-Element eine Vorderkante 123c auf, die als Schneidkante fungiert. Weiterhin ist der am nächsten zum dritten Spannrahmen-Element 23 gelegene Konturpunkt des ersten und oder zweiten Werkzeugteils 11, 12 als Gegenlage zur Schneidkante 123c und optional zusätzlich als Schneidkante gestaltet. Die Gegenlage ist am ersten Werkzeugteil 11 ausgebildet, wenn mittels der Schneid-Voirrichtung 100 bzw. der Schneidkante 123c die erste Schicht 1 geschnitten werden soll. Alternativ oder zusätzlich ist die Gegenlage am zweiten Werkzeugteil 11 ausgebildet, wenn mittels der Schneid-Vorrichtung 100 bzw. der Schneidkante 123c die zweite Schicht 2 geschnitten werden soll.

Die Vorderkante 123c des dritten Spannrahmen-Elements 23 ist derart angeordnet, dass dieses bei einer entsprechenden Stellung des dritten Spannrahmen-Elements 23 zum zweiten Werkzeugteil 12 bereichsweise nahe an der Außenkontur des Werkzeugteils 12 verläuft und dabei mit einem für den Schneidvorgang geeigneten Abstand von derselben beabstandet ist.

Die Kante 23c am dritten Spannrahmen-Element und/oder die Kante 12a am zweiten Werkzeugteil 12 kann gehärtet oder vergütet ausgebildet sein.

Das Schneid-Verfahren mittels der ersten Schneid-Einrichtung 100 ist wie folgt

Das dritte Spannrahmen-Element 23, das von der dritten Stell-Einrichtung 33 angetrieben wird, wird nach Erreichen der Schließ-Stellung des Formwerkzeugs, bei der das dritte Spannrahmen-Element zunächst auf dem ausgefahrenen zweiten Distanzierungs-Element 46 weiterhin aufliegt, durch die dritte Stell-Einrichtung 33 in eine untere Stellung heruntergefahren. Dies geschieht in der Ausführungsform der Herstellungs-Vorrichtung nach den Figuren 1 bis 7 durch Einfahren des zweiten Distanzierungs-Elements 46. Die untere Stellung des zweiten Distanzierungs-Elements 46 ist bei dieser Ausführungsform vorzugsweise derart vorgesehen, dass dieses die Bewegung des dritten Spannrahmen-Elements 23 nach dem SchneidVorgang nach unten begrenzt. Die erste Stell-Einrichtung 31 kann dabei derart betätigt werden oder betätigbar sein, dass diese die durch die dritte Stell-Einrichtung 33 ausgeübte Schneidkraft unterstützt. Dabei wird das zweite Spannrahmen-Element 22 überdrückt oder vor/mit der Schneidbewegung drucklos geschaltet oder während der Schneidbewegung eingefahren.

Nach der Herstellungs-Vorrichtung nach den Figuren 1 bis 7 ist das zweite Distanzierungs-Element 46 einfahrbar, um dem dritten Spannrahmen-Element 23 eine ausreichende Bewegungsfreiheit und insbesondere ohne eine vom zweiten Distanzierungs-Element 46 ausgeübte Gegenkraft zu verschaffen. Dadurch kann von dem dritten Spannrahmen-Element 23 eine Bewegung relativ gegenüber dem zweiten Werkzeugteil 12 ausgeführt werden. Diese Bewegung ist eine Schneid-Bewegung, wenn eine entsprechende Kante des dritten Spannrahmen-Elements 23 entsprechend nahe an einem Anlage- oder Berührungs-Bereich des zweiten Werkzeugteils entlang fährt, so dass die zweite Schicht 2 entsprechend durchtrennt werden kann. Dabei wirken also das dritte Spannrahmen-Element 23 wie ein Matrize und das zweite Werkzeugteil wie ein Stempel oder beide scherenartig zueinander.

Durch die optional vorgesehene Temperierung zumindest eines Anlagebereichs bzw. Segments kann das Spiel oder die Beabstandung der Schneidfläche zum zweiten Werkzeugteil, also die Schneid-Passung, optimiert und insbesondere verringert weden.

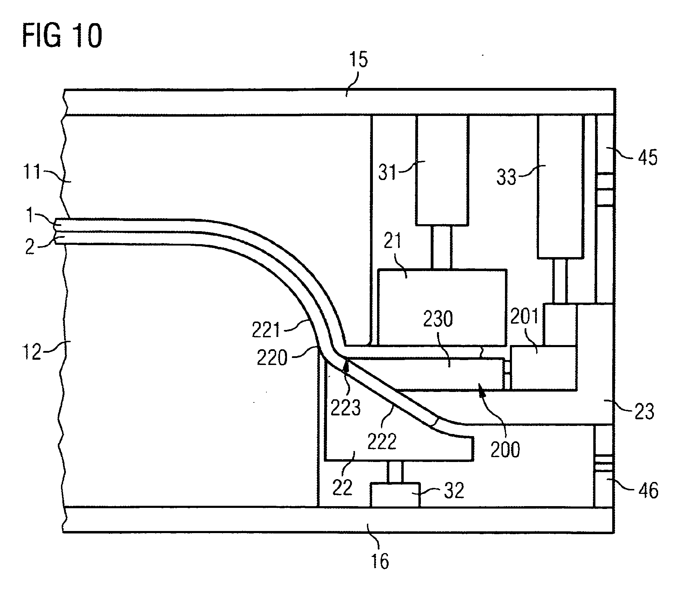

Im folgenden wird eine zweite Schneid-Einrichtung 200 beschrieben, die quer zur Richtung der Stell-Bewegung des dritten Spannrahmen-Elements 23 zur Aufnahme der ersten oder zweiten Schicht 1, 2 betätigbar ist. Die zweite Schneid-Einrichtung 200 ist Bestandteil des dritten Spannrahmen-Elements 23 oder diesem zugeordnet. In beiden Fällen wird dieses über eine Stell-Einrichtung 201 bewegt oder betätigt. Diese Schneid-Einrichtung 200 umfasst vorzugsweise zumindest ein über die Stell-Einrichtung 201 bewegliches Messer 230 zum Abschneiden eines zwischen dem ersten und dem zweiten Werkzeugteil heraustretenden Überstandes der zweiten Schicht 2 (Figur 10). Das Messer ist über den Stellantrieb 201 längsverschieblich und quer zur Stell-Bewegung des dritten Spannrahmen-Elements 23 und/oder des zweiten Werkzeugteils 12 beweglich in oder an dem dritten Spannrahmen-Element 23 angeordnet. Das Messer 230 weist eine dem zweiten Werkzeugteil 12 zugewandte Schneidkante 223 auf.

Aufgrund der Betätigung des Stellantriebs 201 des Messers 230 wird dieses auf einen entsprechenden Randbereich 221 des zweiten Werkzeugteils 12 zubewegt, das als Gegenfläche für die dieser zugewandten Schneide des Messers 230 vorgesehen ist. Durch ein entsprechendes Einfahren der zweiten Stell-Einrichtung 32 ist ein Teil des entsprechenden abzuschneidenden Überstands der zweiten Schicht 2 zwischen der Schneide des Messers und dem zweiten Werkzeugteil 12 gelegen. Der Überstand der zweiten Schicht 2 wird dann durch den aufgrund der Zustellbewegung des Messers 230 aufgebrachten Druck abgeschnitten.

Alternativ kann auch ein entsprechender Randbereich 222 des zweiten Spannrahmen-Elements 22 als Gegenlage verwendet werden, so dass dann ein Überstand der zweiten Schicht 2 durch die Schneidkante 223 des Messers 230 und die Gegenlage 222 des zweiten Spannrahmen-Elements 22 abgescnitten werden kann.

Im folgenden wird eine dritte Schneid-Einrichtung 300 beschrieben, die in Richtung der Stell-Bewegung des dritten Spannrahmen-Elements 23 zur Aufnahme der ersten oder zweiten Schicht 1, 2 betätigbar ist, um die erste Schicht 1 und optional die zweite Schicht 2 zu beschneiden. Die dritte Schneid-Einrichtung 300 kann alternativ oder zusätzlich zur ersten oder zweiten Schneid-Einrichtung 100 bzw. 200 angeordnet sein.

Die dritte Schneid-Einrichtung 300 umfasst ein Messer oder Schnittmesser 330, das von einer Zustell-Einrichtung 301 bewegbar ist und von einer Mechanik 340 mit einer Führung geführt wird. Die Mechanik ist derart gestaltet, dass das Messer 330 in Richtung zum Fahrweg oder der Stell-Bewegung z. B. der ersten Stell-Einrichtung 31 zum Beschneiden der ersten Schicht 1 verschieblich angeordnet ist. Dabei dient ein entsprechender Bereich des der Schneid-Kante 350 des Messers 330 zugewandten Anlagebereichs 23a des dritten Spannrahmen-Elements 23 als Gegenlage 323c für dieSchneid-Kante 350 beim Schneiden der ersten Schicht 1.

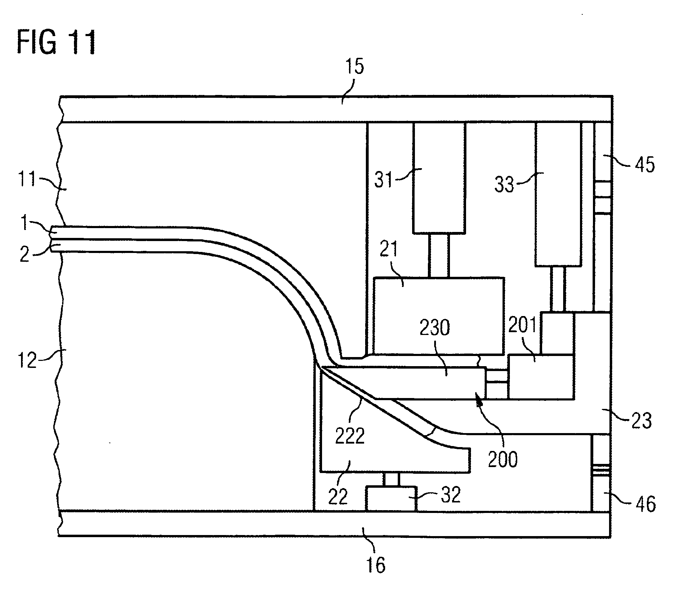

Die Figur 11 zeigt den Zustand der Schneid-Vorrichtung nach dem Ausführen der Schneid-Bewegung.

Optional kann auch die erste 1 zusammen mit der zweiten Schicht 2 geschnitten werden, wenn vorher das dritte Spannrahmen-Element 23 in Bezug auf die Werkzeugteile 11, 12 zurückgezogen wird, so dass dann ein entsprechender Anlagebereich des zweiten Spannrahmen-Elements 22 als Gegenlage dienen kann.

Das Schnittmesser 330 kann sowohl als thermisches oder mechanisches Messer ausgeführt sein. In der Ausführung als thermisches Messer kann dieses z.B. über einen Widerstand beheizbar sein. Das Messer kann auch sowohl als thermisches als auch als mechanisches Messer ausgeführt sein. Durch die Beheizung des Messers kann eine Versiegelungs-Funktion insbesondere bei Temperatur-empfindlichen ersten Schichten 1 erfüllt werden.

Die Schneidkante 350 des Schnittmessers 330 kann insbesondere als eine konturgebundene Schneidfläche, also als dreidimensionale Schneidfläche gestaltet sein.

Die drei voranstehend ausgeführten Schneid-Vorrichtungen 100, 200, 300 können einzeln oder in Kombination in ein und demselben Herstellungs-Vorrichtung vorgesehen sein.

Nachfolgend wird eine Ausführungsform des Verfahrens beschrieben, bei der die erste Schicht eine Dekorations-Schicht und die zweite Schicht eine Träger-Schicht ist. Generell können die Schichten auch andere Anwendungsfuntkionen besitzen und/oder auch jeweils wiederum aus mehreren Schichten gebildet sein. Erfindungsgmemäß handelt es sich bei dem Verfahren isnbesondere um einen einstufigen Prozeß zur Herstellung eines Trägerteils inklusive der Kaschierung mit einer Dekorations-Schicht.

Das erste und das dritte Spannrahmen-Element 21 bzw. 23 sind derart beweglich, dass die relativen Stellungen des ersten und des dritten Spannrahmen-Elements 21 bzw. 23 zwischen einer ersten Stellung oder Grund-Stellung und einer zweiten Stellung einstellbar ist. Die Grund-Stellung des ersten und dem dritten Spannrahmen-Elements 21 bzw. 23 ist derart vorgesehen, dass die erste Schicht oder z.B. die Dekorations-Schicht zwischen diesen Spannrahmen-Elementen 21, 23 eingelegbar ist. In dieser Grundstellung ist das zweite Spannrahmen-Element 22 derart positionierbar, dass die zweite Schicht 2 zwischen das zweite und das dritte Spannrahmen-Element einlegbar ist.

Bei der zweiten Stellung des ersten und des dritten Spannrahmen-Elements 21 bzw. 23 wird die erste Schicht während des Zusammenfahrens der beiden Werkzeugteile 11, 12 in vorbestimmter Weise von diesen Spannrahmen-Elementen 21, 23 gehalten, während sich das erste und das zweite Werkzeugteil 11 bzw. 12 in einer Stellung befinden, bei der die erste 1 und die zweite Schicht 2 keiner Verformung durch diese unterliegen. Das dritte Spannrahmen-Element 23 und das zweite Spannrahmen-Element 22 sind derart zueinander beweglich, dass die zweite Schicht 2 oder Träger-Schicht in einer dritten Stellung der Spannrahmen-Elemente mittels des zweiten Spannrahmen-Elements 22 und des dritten Spannrahmen-Elements 23 fixierbar ist, so dass die zweite Schicht und die erste Schicht außerhalb der Werkzeugteile mittels des dritten Spannrahmen-Elements voneinander getrennt gehalten werden. In diesem Zustand der fixierten ersten Schicht kann das erste 11 und das zweite 12 Werkzeugteil relativ zueinander zusammengefahren werden, um die zweite Schicht 2 und die erste Schicht 1 innerhalb des Werkzeugs bei dessen Schliessen miteinander zu verformen und zu verbinden.

Erfindungsgemäß ist ein Verfahren zur Herstellung eines Bauteils aus zumindest einer ersten 1 oder Dekorations-Schicht und einer zweiten 2 Schicht oder Träger-Schicht vorgesehen, bei dem eine Verformung der ersten 1 und der zweiten 2 Schicht sowie die Verbindung der beiden Schichten 1, 2 miteinander durch das Zusammenfahren eines ersten Werkzeugteils 11 und eines zweiten Werkzeugteils 12 eines Verformungswerkzeugs mit vorzugsweise dreidimensionalen Verformungskonturen erfolgt, wobei die Verformungskontur des ersten Werkzeugteils 11 der ersten Schicht 1 und die Verformungskontur des zweiten Werkzeugteils 12 der zweiten Schicht 2 zugewandt ist, wobei in einer Ausgangsstellung das erste 11 und das zweite 12 Werkzeugteil auseinander gefahren ist. Das erfindungsgemäße Schritte umasst folgende Schritte:
- Fahren eines ersten Spannrahmen-Elements 21 und eines zweiten Spannrahmen-Elements 22 in eine zueinander ausgefahrene Stellung und Einlegen der ersten Schicht 1 zwischen die beiden Werkzeugteile 11, 12 und zwischen das erste 21 und ein zwischen dem ersten 21 und dem zweiten 22 Spannrahmen-Element angeordnetes drittes Spannrahmen-Element 23 in einer Einlege-Stellung, wobei das erste, zweite und das dritte Spannrahmen-Element außerhalb der verformenden Kontur der Werkzeugteile 11, 12 angeordnet sind;
- Fahren des dritten Spannrahmen-Elements 23 in eine Halte-Stellung für die erste Schicht 1, in der sich das dritte Spannrahmen-Element 23 in einer vorbestimmten Entfernung zum ersten Spannrahmen-Element 21 befindet, bei der die erste Schicht 1 durch das erste Spannrahmen-Element 21 und das dritte Spannrahmen-Element 23 gehalten wird (Figur 3),
- Auflegen der zweiten Schicht 2 zwischen die beiden Werkzeugteile 11, 12 und auf das zweite Spannrahmen-Element 22 (Figur 4),
- Fahren des zweiten Spannrahmen-Elements 22 in eine Halte-Stellung für die zweite Schicht 2, in der sich das zweite Spannrahmen-Element 2w in einer vorbestimmten Entfernung zum dritten Spannrahmen-Element 23 befindet, bei der die zweite Schicht 2 durch das zweite Spannrahmen-Element 22 und das dritte Spannrahmen-Element 23 gehalten wird (Figur 5),
- Zusammenfahren der Werkzeugteile bis zu relativen Lagen zueinander, bei der die erste 1 und die zweite 2 Schicht verformt werden,
- nach der Verformung Auseinanderfahren der Werkzeugteile und der Spannrahmen-Elemente, um die miteinander verbundene erste und zweite Schicht aus dem Werkzeug herausnehmen.

Optional kann zusätzlich vorgesehen sein, dass nach dem Verformungsvorgang mittels einer Schneid-Einrichtung ein zwischen dem ersten und dem zweiten Werkzeugteil heraustretender Überstand der zweiten Schicht abgeschnitten wird.

Vor dem Einlegen der Schichten 1, 2 zwischen die Werkzeugteile kann ein Erwärmen der ersten oder der zweiten Schicht erfolgen.

Beim Zusammenfahren der Werkzeugteile 11, 12 kann das zweite und das dritte Spannrahmen-Element in eine relative Lage zueinander gefahren werden, bei der die zweite Schicht in vorbestimmter Weise bei der Verformung der Schichten je nach Anwendungsfall nachfliessen oder ein Nachfliessen gehemmt werden kann. Ebenso kann Schritt (e) kann das erste und das dritte Spannrahmen-Element in eine relative Lage zueinander gefahren werden, bei der die erste Schicht in vorbestimmter Weise bei der Verformung der Schichten je nach Anwendungsfall nachfliessen oder ein Nachfliessen gehemmt werden kann.

## Patentansprüche

1. Verfahren zur Herstellung eines Bauteils durch Press-Verformung einer ersten und einer zweiten Material-Schicht, bei der eine Verbindung der beiden Schichten innerhalb der Verformungskonturen (13, 14) zweier Werkzeugteile (11, 12) durch deren Zusammenfahren erfolgt, wobei in einer Ausgangsstellung das erste (11) und das zweite (12) Werkzeugteil auseinander gefahren ist,
mit den folgenden Schritten:
(a) Fahren eines ersten Spannrahmen-Elements (21) und eines zweiten Spannrahmen-Elements (22) in eine zueinander ausgefahrene Stellung und Einlegen der ersten Schicht (1) zwischen die beiden Werkzeugteile und zwischen das erste und ein zwischen dem ersten und dem zweiten Spannrahmen-Element angeordnetes drittes Spannrahmen-Element (23) und Einlegen der zweiten Schicht (2) zwischen die beiden Werkzeugteile und zwischen das zweite (22) und das dritte Spannrahmen-Element (23), wobei das erste, zweite und das dritte Spannrahmen-Element außerhalb der verformenden Kontur der Werkzeugteile angeordnet ist,
(b) Zusammenfahren des ersten (21), zweiten (22) und des dritten (23) Spannrahmen-Elements in eine Stellung, in der die erste (1) und die zweite (2) Schicht durch das erste Spannrahmen-Element und das dritte Spannrahmen-Element bzw. das zweite Spannrahmen-Element und das dritte Spannrahmen-Element gehalten werden,
(c) Zusammenfahren der Werkzeugteile relativ zueinander unter Verformung der ersten und der zweiten Schicht im Bereich der Verformungskonturen (13, 14) der Werkzeugteile (11, 12),
(d) Auseinanderfahren der Werkzeugteile und der Spannrahmen-Elemente, um die miteinander verbundene erste und zweite Schicht aus dem Werkzeug herausnehmen zu können, **dadurch gekennzeichnet, dass**
bei Schritt (b) das zweite und das dritte Spannrahmen-Element in eine relative Lage zueinander gefahren werden, bei der die erste Schicht und/oder die zweite Schicht (2) in vorbestimmter Weise bei der Verformung der Schichten nachfliessen oder ein Nachfliessen gehemmt werden kann, und wobei die erste Schicht (1) eine Dekorations-Schicht und die zweite Schicht (2) eine Träger-Schicht des herzustellenden Bauteils oder die erste Schicht (1) eine Träger-Schicht und die zweite Schicht (2) eine Dekorations-Schicht des herzustellenden Bauteils ist.

2. Verfahren zur Herstellung eines Bauteils aus zumindest einer ersten und einer zweiten Schicht nach dem Patentanspruch 1, **dadurch gekennzeichnet, dass** beim Zusammenfahren des ersten (21), zweiten (22) und des dritten (23) Spannrahmen-Elements in Schritt (b) die Entfernung zwischen dem ersten (21) und dritten (23) Spann-Element sowie zwischen dem zweiten (22) und dritten (23) Spann-Element mittels Abstandhalter (41, 42) eingestellt wird.

3. Verfahren zur Herstellung eines Bauteils aus zumindest einer ersten und einer zweiten Schicht nach einem der voranstehenden Patentansprüche, **dadurch gekennzeichnet, dass** beim Zusammenfahren des ersten (21), zweiten (22) und des dritten (23) Spannrahmen-Elements in Schritt (b) die Position des dritten Spannrahmen-Elements in bezug auf das erste Spannrahmen-Element durch ein erstes Distanz-Element (45) bestimmt ist, das mit der Position des zweiten Werkzeugteils gekoppelt ist.

4. Verfahren zur Herstellung eines Bauteils aus zumindest einer ersten und einer zweiten Schicht nach einem der voranstehenden Patentansprüche, **dadurch gekennzeichnet, dass** im Schritt (b) die Position der Spannrahmen-Elemente eine Stellung einnehmen, bei der sowohl der am nächsten in Richtung zum ersten Werkzeugteil (11) gelegene Konturpunkt des ersten Spannrahmen-Elements (21) als auch der am nächsten in Richtung zum zweiten Werkzeugteil (12) gelegene Konturpunkt des zweiten Spannrahmen-Elements (22) zwischen dem am nächsten zum ersten Spannrahmen-Element (21) gelegenen Konturpunkt des ersten Werkzeugteils (11) und dem am nächsten zum zweiten Spannrahmen-Element (21) gelegenen Konturpunkt des zweiten Spannrahmen-Elements (22) gelegen ist.

5. Verfahren zur Herstellung eines Bauteils aus zumindest einer ersten und einer zweiten Schicht nach einem der voranstehenden Patentansprüche, **dadurch gekennzeichnet, dass** nach dem Verformungsvorgang mittels einer Schneid-Einrichtung ein zwischen dem ersten (11) und dem zweiten (12) Werkzeugteil heraustretender Überstand der zweiten Schicht (2) und/oder ein zwischen dem ersten (11) und dem zweiten (12) Werkzeugteil heraustretender Überstand der ersten Schicht (1) abgeschnitten wird.

6. Verfahren zur Herstellung eines Bauteils aus zumindest einer ersten und einer zweiten Schicht nach einem der voranstehenden Patentansprüche, **dadurch gekennzeichnet, dass** vor dem Einlegen zwischen die Werkzeugteile und auf das zweiten Spannrahmen-Element (22) ein Erwärmen einer oder beider der Schichten (1, 2) erfolgt.

7. Verfahren zur Herstellung eines Bauteils aus zumindest einer ersten und einer zweiten Schicht nach einem der voranstehenden Patentansprüche , **dadurch gekennzeichnet, dass** die erste (1) und/oder die zweite (2) Schicht mehrschichtig ist.

8. Verfahren zur Herstellung eines Bauteils aus zumindest einer ersten und einer zweiten Schicht nach Patentanspruch 7, **dadurch gekennzeichnet, dass** zumindest die der Träger-Schicht zugewandte Oberfläche der Dekorations-Schicht aus einem Gewebe gebildet ist.

9. Verfahren zur Herstellung eines Bauteils aus zumindest einer ersten und einer zweiten Schicht nach Patentanspruch 8, **dadurch gekennzeichnet, dass** die Oberfläche der Dekorations-Schicht aus Vlies, aus Filz, ein Flachgewebe oder aus einem Rundstrick gebildet ist.

10. Verfahren zur Herstellung eines Bauteils aus zumindest einer ersten und einer zweiten Schicht nach einem der voranstehenden Patentansprüche 8 bis 10, **dadurch gekennzeichnet, dass** die Dekorations-Schicht aus textilen Materialien, einem Schaum und einem Vlies-Material gebildet ist und/oder Schaum-Bestandteile enthält und/oder aus einem textilen Gewebe, einem Schaum-Kunstleder, einer Kunststoff-Folie oder ein Leder gebildet ist.

11. Verfahren zur Herstellung eines Bauteils aus zumindest einer ersten und einer zweiten Schicht nach Patentanspruch 10, **dadurch gekennzeichnet, dass** die Dekorations-Schicht aus einem Polypropylen-Schaum oder einem PE-Schaum oder einem auf Polyuretan aufbauenden Schaum gebildet ist.

12. Verfahren zur Herstellung eines Bauteils aus zumindest einer ersten und einer zweiten Schicht nach einem der voranstehenden Patentansprüche 8 bis 11, **dadurch gekennzeichnet, dass** die Träger-Schicht ein Kunststoff ist und/oder die Träger-Schicht aus Naturfasern, Glasfasern, Kunststoff-Fasern und/oder Polypropylen (PP)-Fasern gebildet ist.

13. Verfahren zur Herstellung eines Bauteils aus zumindest einer ersten und einer zweiten Schicht nach Patentanspruch 12, **dadurch gekennzeichnet, dass** die Naturfasern der Träger-Schicht aus Flachs oder Kenaf, Sisal, Leinen oder Baumwolle gebildet sind.

14. Verfahren zur Herstellung eines Bauteils durch Press-Verformung einer ersten und einer zweiten Material-Schicht, bei der eine Verbindung der beiden Schichten innerhalb der Verformungskonturen (13, 14) zweier Werkzeugteile (11, 12) durch deren Zusammenfahren erfolgt, wobei in einer Ausgangsstellung das erste (11) und das zweite (12) Werkzeugteil auseinander gefahren ist,
mit folgenden Schritten:
(a) Fahren eines ersten Spannrahmen-Elements (21) und eines zweiten Spannrahmen-Elements (22) in eine zueinander ausgefahrene Stellung und Einlegen der ersten Schicht (1) zwischen die beiden Werkzeugteile und zwischen das erste und ein zwischen dem ersten und dem zweiten Spannrahmen-Element angeordnetes drittes Spannrahmen-Element (23) und Einlegen der zweiten Schicht (2) zwischen die beiden Werkzeugteile und zwischen das zweite (22) und das dritte Spannrahmen-Element (23), wobei das erste, zweite und das dritte Spannrahmen-Element außerhalb der verformenden Kontur der Werkzeugteile angeordnet sind,
(b) Zusammenfahren des ersten (21), zweiten (22) und des dritten (23) Spannrahmen-Elements in eine Stellung, in der die erste (1) und die zweite (2) Schicht durch das erste Spannrahmen-Element und das dritte Spannrahmen-Element bzw. das zweite Spannrahmen-Element und das dritte Spannrahmen-Element gehalten werden,
(c) Zusammenfahren der Werkzeugteile relativ zueinander unter Verformung der ersten und der zweiten Schicht im Bereich der Verformungskonturen (13, 14) der Werkzeugteile (11, 12),
(d) Auseinanderfahren der Werkzeugteile und der Spannrahmen-Elemente, um die miteinander verbundene erste und zweite Schicht aus dem Werkzeug herausnehmen zu können, **dadurch gekennzeichnet, dass**
bei Schritt (b) das zweite und das dritte Spannrahmen-Element in eine relative Lage zueinander gefahren werden, bei der die zweite Schicht (2) in vorbestimmter Weise bei der Verformung der Schichten nachfliessen oder ein Nachfliessen gehemmt werden kann und
wobei beim Zusammenfahren des ersten (21), zweiten (22) und des dritten (23) Spannrahmen-Elements in Schritt (b) die Entfernung zwischen dem ersten (21) und dritten (23) Spann-Element sowie zwischen dem zweiten (22) und dritten (23) Spann-Element mittels Abstandhalter (41, 42) eingestellt wird.

15. Verfahren zur Herstellung eines Bauteils aus zumindest einer ersten und einer zweiten Schicht nach dem Patentanspruch 14, **dadurch gekennzeichnet, dass** bei Schritt (b) das zweite und das dritte Spannrahmen-Element in eine relative Lage zueinander gefahren werden, bei der die erste Schicht (1) in vorbestimmter Weise bei der Verformung der Schichten nachfliessen oder ein Nachfliessen gehemmt werden kann.

16. Verfahren zur Herstellung eines Bauteils aus zumindest einer ersten und einer zweiten Schicht nach einem der voranstehenden Patentansprüche 14 bis 15, **dadurch gekennzeichnet, dass** beim Zusammenfahren des ersten (21), zweiten (22) und des dritten (23) Spannrahmen-Elements in Schritt (b) die Position des dritten Spannrahmen-Elements in bezug auf das erste Spannrahmen-Element durch ein erstes Distanz-Element (45) bestimmt ist, das mit der Position des zweiten Werkzeugteils gekoppelt ist.

17. Verfahren zur Herstellung eines Bauteils aus zumindest einer ersten und einer zweiten Schicht nach einem der voranstehenden Patentansprüche 14 bis 16, **dadurch gekennzeichnet, dass** im Schritt (b) die Position der Spannrahmen-Elemente eine Stellung einnehmen, bei der sowohl der am nächsten in Richtung zum ersten Werkzeugteil (11) gelegene Konturpunkt des ersten Spannrahmen-Elements (21) als auch der am nächsten in Richtung zum zweiten Werkzeugteil (12) gelegene Konturpunkt des zweiten Spannrahmen-Elements (22) zwischen dem am nächsten zum ersten Spannrahmen-Element (21) gelegenen Konturpunkt des ersten Werkzeugteils (11) und dem am nächsten zum zweiten Spannrahmen-Element (21) gelegenen Konturpunkt des zweiten Spannrahmen-Elements (22) gelegen ist.

18. Verfahren zur Herstellung eines Bauteils aus zumindest einer ersten und einer zweiten Schicht nach einem der voranstehenden Patentansprüche 14 bis 17, **dadurch gekennzeichnet, dass** nach dem Verformungsvorgang mittels einer Schneid-Einrichtung ein zwischen dem ersten (11) und dem zweiten (12) Werkzeugteil heraustretender Überstand der ersten Schicht (1) und/ oder mittels einer Schneid-Einrichtung ein zwischen dem ersten (11) und dem zweiten (12) Werkzeugteil heraustretender Überstand der zweiten Schicht (2) abgeschnitten wird.

19. Verfahren zur Herstellung eines Bauteils aus zumindest einer ersten und einer zweiten Schicht nach einem der voranstehenden Patentansprüche 14 bis 18, **dadurch gekennzeichnet, dass** vor dem Einlegen zwischen die Werkzeugteile und auf das zweiten Spannrahmen-Element (22) ein Erwärmen einer oder beider der Schichten (1, 2) erfolgt.

20. Verfahren zur Herstellung eines Bauteils aus zumindest einer ersten und einer zweiten Schicht nach einem der voranstehenden Patentansprüche 14 bis 19, **dadurch gekennzeichnet, dass** die erste (1) und/oder die zweite (2) Schicht mehrschichtig ist.

21. Verfahren zur Herstellung eines Bauteils aus zumindest einer ersten und einer zweiten Schicht nach einem der voranstehenden Patentansprüche 14 bis 20, **dadurch gekennzeichnet, dass** die erste Schicht (1) eine Dekorations-Schicht und die zweite Schicht (2) eine Träger-Schicht des herzustellenden Bauteils oder die erste Schicht (1) eine Träger-Schicht und die zweite Schicht (2) eine Dekorations-Schicht des herzustellenden Bauteils ist.

22. Verfahren zur Herstellung eines Bauteils aus zumindest einer ersten und einer zweiten Schicht nach Patentanspruch 21, **dadurch gekennzeichnet, dass** zumindest die der Träger-Schicht zugewandte Oberfläche der Dekorations-Schicht aus einem Gewebe gebildet ist und/oder die Oberfläche der Dekorations-Schicht aus Vlies, aus Filz, ein Flachgewebe oder aus einem Rundstrick gebildet ist und/oder die Dekorations-Schicht Schaum-Bestandteile enthält.

23. Verfahren zur Herstellung eines Bauteils aus zumindest einer ersten und einer zweiten Schicht nach einem der voranstehenden Patentansprüche 21 bis 22, **dadurch gekennzeichnet, dass** die Dekorations-Schicht aus einem textilen Gewebe, einem Schaum-Kunstleder, einer Kunststoff-Folie oder ein Leder und/oder aus textilen Materialien, einem Schaum und einem Vlies-Material und/oder aus einem Polypropylen-Schaum oder einem PE-Schaum oder einem auf Polyuretan aufbauenden Schaum gebildet ist.

24. Verfahren zur Herstellung eines Bauteils aus zumindest einer ersten und einer zweiten Schicht nach einem der voranstehenden Patentansprüche 14 bis 23, **dadurch gekennzeichnet, dass** die Träger-Schicht ein Kunststoff ist und/oder aus Naturfasern, Glasfasern, Kunststoff-Fasern und/oder Polypropylen (PP)-Fasern gebildet ist.

25. Verfahren zur Herstellung eines Bauteils aus zumindest einer ersten und einer zweiten Schicht nach Patentanspruch 24, **dadurch gekennzeichnet, dass** die Naturfasern der Träger-Schicht aus Flachs oder Kenaf, Sisal, Leinen oder Baumwolle gebildet sind.

26. Vorrichtung zur Herstellung eines Bauteils aus zumindest einer ersten Schicht (1) und einer zweiten Schicht (2) mit einem die Kontur des herzustellenden Bauteils bestimmenden Formwerkzeug mit zumindest einem ersten, der ersten Schicht zugewandten Werkzeugteil (11) mit einer dreidimensionalen Verformungskontur und einem zweiten, der zweiten Schicht zugewandten Werkzeugteil (12) mit einer dreidimensionalen Verformungskontur, die in einem Druck-Geber eingespannt sind, um die Verformung der ersten Schicht (1) und der zweiten Schicht (2) sowie die Verbindung der beiden Schichten miteinander durch das Zusammenfahren des ersten und des zweiten Werkzeugteils zu bewirken, sowie mit einer Spannrahmen-Einrichtung mit zueinander beweglichen Spannrahmen-Elementen, um die Schichten während des Verformungsvorganges außerhalb des Konturbereichs des Werkzeugs in vorbestimmter Weise zu halten,
wobei
die Spannrahmen-Einrichtung umfaßt:
- ein erstes Spannrahmen-Element (21), das mittels einer ersten Stell-Einrichtung (31) relativ zum ersten Werkzeugteil beweglich ist,
- ein zweites Spannrahmen-Element (22), das mittels einer zweiten Stell-Einrichtung (32) relativ zum zweiten Werkzeugteil beweglich ist,
- ein drittes Spannrahmen-Element (23), das mittels einer dritten Stell-Einrichtung (33) relativ zum ersten oder zweiten Werkzeugteil beweglich und zwischen dem ersten und dem zweiten Spannrahmen-Element angeordnet ist,
wobei das erste, das zweite und das dritte Spannrahmen-Element derart angeordnet ist, dass ein Material für die erste Schicht (1) zwischen dem ersten Spannrahmen-Element und dem dritten Spannrahmen-Element und ein Material für die zweite Schicht (w) zwischen dem zweiten Spannrahmen-Element und dem dritten Spannrahmen-Element einelgbar ist, so dass die Schichten (1, 2) mittels des dritten Spannrahmen-Elements voneinander getrennt gehalten werden können, **dadurch gekennzeichnet, dass** Abstandhalter (41, 42) an dem dritten Spannrahmen-Element angeordnet sind,
mit denen der minimale Abstand zwischen dem ersten und dritten sowie zwischen dem zweiten und dritten Spannrahmen-Element vorgegeben ist.

27. Vorrichtung zur Herstellung eines Bauteils aus zumindest einer ersten Schicht und einer zweiten Schicht mit einem die Kontur des herzustellenden Bauteils bestimmenden Formwerkzeug nach dem Patentanspruch 26, **dadurch gekennzeichnet, dass** die Abstandhalter (41, 42) einstellbar sind.

28. Vorrichtung zur Herstellung eines Bauteils aus zumindest einer ersten Schicht und einer zweiten Schicht mit einem die Kontur des herzustellenden Bauteils bestimmenden Formwerkzeug nach einem der Patentansprüche 25 bis 27, **dadurch gekennzeichnet, dass** am ersten Spannrahmen-Element eine Schneid-Einrichtung zum Abschneiden eines zwischen dem ersten und dem zweiten Werkzeugteil heraustretenden Überstandes der ersten Schicht angeordnet ist.

29. Vorrichtung zur Herstellung eines Bauteils aus zumindest einer ersten Schicht und einer zweiten Schicht mit einem die Kontur des herzustellenden Bauteils bestimmenden Formwerkzeug nach einem der Patentansprüche 25 bis 28, **dadurch gekennzeichnet, dass** am dritten Spannrahmen-Element eine Schneid-Einrichtung zum Abschneiden eines zwischen dem ersten und dem zweiten Werkzeugteil heraustretenden Überstandes der zweiten Schicht angeordnet ist.

30. Vorrichtung zur Herstellung eines Bauteils aus zumindest einer ersten Schicht und einer zweiten Schicht mit einem die Kontur des herzustellenden Bauteils bestimmenden Formwerkzeug nach dem Patentanspruch 29, **dadurch gekennzeichnet, dass** die Schneid-Einrichtung eine dem zweiten Werkzeugteil zugewandte, am dritten Spannrahmen-Element angeordnete Kante umfasst, mit der bei einer Bewegung des dritten Spannrahmen-Elements winklig zur Träger-Schicht an der Stelle des Austritts derselben am zweiten Werkzeugteil ein Überstand der Träger-Schicht abgeschnitten werden kann.

31. Vorrichtung zur Herstellung eines Bauteils aus zumindest einer ersten Schicht und einer zweiten Schicht mit einem die Kontur des herzustellenden Bauteils bestimmenden Formwerkzeug nach dem Patentanspruch 29, **dadurch gekennzeichnet, dass** die Schneid-Einrichtung zumindest ein über eine Stell-Einrichtung bewegliches Messer zum Abschneiden eines zwischen dem ersten und dem zweiten Werkzeugteil heraustretenden Überstandes der Träger-Schicht umfasst, das eine dem zweiten Werkzeugteil zugewandte Schneidkante aufweist und das über die Zustellbewegung aufgebrachter Druck die zweite Schicht schneidet.

## Claims

1. A method for producing a component by press-molding a first and a second material layer, in which a connection between the two layers is produced within the molding contours (13, 14) of two tool parts (11, 12) by moving together said tool parts, wherein the first (11) and the second (12) tool part are moved apart from one another in an initial position,
with said method comprising the following steps:
(a) moving a first clamping frame element (21) and a second clamping frame element (22) into an extended position to one another and placing the first layer (1) between the two tool parts and between the first clamping frame element and a third clamping frame element (23) arranged between the first and the second clamping frame element, as well as placing the second layer (2) between the two tool parts and between the second clamping frame element (22) and the third clamping frame element (23), wherein the first, the second and the third clamping frame element each is arranged outside the molding contour of the tool parts,
(b) moving together the first (21), the second (22) and the third (23) clamping frame element into a position, in which the first (1) and the second (2) layer are respectively held by the first clamping frame element and the third clamping frame element and by the second clamping frame element and the third clamping frame element,
(c) moving together the tool parts relative to one another and simultaneously molding the first and the second layer in the region of the molding contours (13, 14) of the tool parts (11, 12),
(d) moving apart the tool parts and the clamping frame elements in order to remove the interconnected first and second layers from the tool,
**characterized in that**
the second and the third clamping frame element are in step (b) moved into a position relative to one another, in which the first layer and/or the second layer (2) can continue to flow in a predefined fashion during the molding of the layers or a continued flow can be inhibited, wherein the first layer (1) consists of a decorative layer and the second layer (2) consists of a supporting layer of the component to be produced or the first layer (1) consists of a supporting layer and the second layer (2) consists of a decorative layer of the component to be produced.

2. The method for producing a component of at least a first and a second layer according to claim 1, **characterized in that** the distance between the first (21) and the third (23) clamping element, as well as between the second (22) and the third (23) clamping element, is adjusted by means of spacers (41, 42) while the first (21), the second (22) and the third (23) clamping frame element are moved together in step (b).

3. The method for producing a component of at least a first and a second layer according to one of the preceding claims, **characterized in that** the position of the third clamping frame element relative to the first clamping frame element is determined by means of a first distance element (45) that is coupled to the position of the second tool part while the first (21), the second (22) and the third (23) clamping frame element are moved together in step (b).

4. The method for producing a component of at least a first and a second layer according to one of the preceding claims, **characterized in that** the clamping frame elements assume in step (b) a position, in which the nearest contour point of the first clamping frame element (21) in the direction toward the first tool part (11), as well as the nearest contour point of the second clamping frame element (22) in the direction toward the second tool part (12), is situated between the contour point of the first tool part (11) that lies nearest to the first clamping frame element (21) and the contour point of the second clamping frame element (22) that lies nearest to the second clamping frame element (21).

5. The method for producing a component of at least a first and a second layer according to one of the preceding claims, **characterized in that** a projection of the second layer (2) protruding between the first (11) and the second (12) tool part and/or a projection of the first layer (1) protruding between the first (11) and the second (12) tool part is cut off by means of a cutting device after the molding process.

6. The method for producing a component of at least a first and a second layer according to one of the preceding claims, **characterized in that** one or both of the layers (1, 2) is/are heated prior to the placement between the tool parts and onto the second clamping frame element (22).

7. The method for producing a component of at least a first and a second layer according to one of the preceding claims, **characterized in that** the first (1) and/or the second (2) layer is/are composed of multiple layers.

8. The method for producing a component of at least a first and a second layer according to claim 7, **characterized in that** at least the surface of the decorative layer that faces the supporting layer is made of a fabric.

9. The method for producing a component of at least a first and a second layer according to claim 8, **characterized in that** the surface of the decorative layer is made of non-woven fabric, felt, a flat fabric or a tubular fabric.

10. The method for producing a component of at least a first and a second layer according to one of preceding claims 8 to 10, **characterized in that** the decorative layer is made of textile materials, a foam and a non-woven material and/or contains foam components and/or is made of a textile fabric, a foam-synthetic leather, a plastic film or a leather.

11. The method for producing a component of at least a first and a second layer according to claim 10, **characterized in that** the decorative layer is made of a polypropylene foam or a PE foam or a polyurethane-based foam.

12. The method for producing a component of at least a first and a second layer according to one of preceding claims 8 to 11, **characterized in that** the supporting layer consists of plastic and/or the supporting layer is made of natural fibers, glass fibers, synthetic fibers and/or polypropylene (PP) fibers.

13. The method for producing a component of at least a first and a second layer according to claim 12, **characterized in that** the natural fibers of the supporting layer consists of flax or kenaf, sisal, linen or cotton.

14. A method for producing a component by press-molding a first and a second material layer, in which a connection between the two layers is produced within the molding contours (13, 14) of two tool parts (11, 12) by moving together said tool parts, wherein the first (11) and the second (12) tool part are moved apart from one another in an initial position,
with said method comprising the following steps:
(a) moving a first clamping frame element (21) and a second clamping frame element (22) into an extended position to one another and placing the first layer (1) between the two tool parts and between the first clamping frame element and a third clamping frame element (23) arranged between the first and the second clamping frame element, as well as placing the second layer (2) between the two tool parts and between the second clamping frame element (22) and the third clamping frame element (23), wherein the first, the second and the third clamping frame element are arranged outside the molding contour of the tool parts,
(b) moving together the first (21), the second (22) and the third (23) clamping frame element into a position, in which the first (1) and the second (2) layer are respectively held by the first clamping frame element and the third clamping frame element and by the second clamping frame element and the third clamping frame element,
(c) moving together the tool parts relative to one another and simultaneously molding the first and the second layer in the region of the molding contours (13, 14) of the tool parts (11, 12),
(d) moving apart the tool parts and the clamping frame elements in order to remove the interconnected first and second layers from the tool,
**characterized in that**
the second and the third clamping frame element are in step (b) moved into a position relative to one another, in which the second layer (2) can continue to flow in a predefined fashion during the molding of the layers or a continued flow can be inhibited,
wherein the distance between the first (21) and the third (23) clamping element, as well as between the second (22) and the third (23) clamping element, is adjusted by means of spacers (41, 42) while the first (21), the second (22) and the third (23) clamping frame element are moved together in step (b).

15. The method for producing a component of at least a first and a second layer according to claim 14, **characterized in that** the second and the third clamping frame element are in step (b) moved into a position relative to one another, in which the first layer (1) can continue to flow in a predefined fashion during the molding of the layers or a continued flow can be inhibited.

16. The method for producing a component of at least a first and a second layer according to one of preceding claims 14 to 15, **characterized in that** the position of the third clamping frame element relative to the first clamping frame element is determined by means of a first distance element (45) that is coupled to the position of the second tool part while the first (21), the second (22) and the third (23) clamping frame element are moved together in step (b).

17. The method for producing a component of at least a first and a second layer according to one of preceding claims 14 to 16, **characterized in that** the clamping frame elements assume in step (b) a position, in which the nearest contour point of the first clamping frame element (21) in the direction toward the first tool part (11), as well as the nearest contour point of the second clamping frame element (22) in the direction toward the second tool part (12), is situated between the contour point of the first tool part (11) that lies nearest to the first clamping frame element (21) and the contour point of the second clamping frame element (22) that lies nearest to the second clamping frame element (21).

18. The method for producing a component of at least a first and a second layer according to one of preceding claims 14 to 17, **characterized in that** a projection of the first layer (1) protruding between the first (11) and the second (12) tool part and/or a projection of the second layer (2) protruding between the first (11) and the second (12) tool part is cut off by means of a cutting device after the molding process.

19. The method for producing a component of at least a first and a second layer according to one of preceding claims 14 to 18, **characterized in that** one or both of the layers (1, 2) is/are heated prior to the placement between the tool parts and onto the second clamping frame element (22).

20. The method for producing a component of at least a first and a second layer according to one of preceding claims 14 to 19, **characterized in that** the first (1) and/or the second (2) layer is/are composed of multiple layers.

21. The method for producing a component of at least a first and a second layer according to one of preceding claims 14 to 20, **characterized in that** the first layer (1) consists of a decorative layer and the second layer (2) consists of a supporting layer of the component to be produced or the first layer (1) consists of a supporting layer and the second layer (2) consists of a decorative layer of the component to be produced.

22. The method for producing a component of at least a first and a second layer according to claim 21, **characterized in that** at least the surface of the decorative layer that faces the supporting layer is made of a fabric and/or the surface of the decorative layer is made of non-woven fabric, felt, a flat fabric or a tubular fabric and/or the decorative layer contains foam components.

23. The method for producing a component of at least a first and a second layer according to one of preceding claims 21 to 22, **characterized in that** the decorative layer is made of a textile fabric, a foam-synthetic leather, a plastic film or a leather and/or of textile materials, a foam and a non-woven material and/or of a polypropylene foam or a PE foam or a polyurethane-based foam.

24. The method for producing a component of at least a first and a second layer according to one of preceding claims 14 to 23, **characterized in that** the supporting layer consists of plastic and/or is made of natural fibers, glass fibers, synthetic fibers and/or polypropylene (PP) fibers.

25. The method for producing a component of at least a first and a second layer according to claim 24, **characterized in that** the natural fibers of the supporting layer consists of flax or kenaf, sisal, linen or cotton.

26. A device for producing a component of at least a first layer (1) and a second layer (2) with a molding tool that defines the contour of the component to be produced and features at least a first tool part (11) that faces the first layer and has a three-dimensional molding contour and a second tool part (12) that faces the second layer and has a three-dimensional molding contour, wherein said tool parts are clamped into a pressure transmitting device in order to mold the first layer (1) and the second layer (2) and to connect the two layers to one another by moving together the first and the second tool part, and with a clamping frame device comprising clamping frame elements that can be moved relative to one another in order to hold the layers outside the contour region of the tool in a predefined fashion during the molding process,
with the clamping frame device comprising:
- a first clamping frame element (21) that can be moved relative to the first tool part by means of a first actuator (31),
- a second clamping frame element (22) that can be moved relative to the second tool part by means of a second actuator (32),
- a third clamping frame element (23) that can be moved relative to the first or second tool part by means of a third actuator (33) and is arranged between the first and the second clamping frame element,
wherein the first, the second and the third clamping frame element are arranged in such a way that a material for the first layer (1) can be placed between the first clamping frame element and the third clamping frame element and a material for the second layer (w) can be placed between the second clamping frame element and the third clamping frame element such that the layers (1, 2) can be held separately of one another by means of the third clamping frame element,
**characterized in that**
spacers (41, 42) are arranged on the third clamping frame element and define the minimum distance between the first and the second and between the second and the third clamping frame element.

27. The device for producing a component of at least a first layer and a second layer with a molding tool that defines the contour of the component to be produced according to claim 26, **characterized in that** the spacers (41, 42) are adjustable.

28. The device for producing a component of at least a first layer and a second layer with a molding tool that defines the contour of the component to be produced according to one of claims 25 to 27, **characterized in that** a cutting device is arranged on the first clamping frame element in order to cut off a projection of the first layer that protrudes between the first and the second tool part.

29. The device for producing a component of at least a first layer and a second layer with a molding tool that defines the contour of the component to be produced according to one of claims 25 to 28, **characterized in that** a cutting device is arranged on the third clamping frame element in order to cut off a projection of the second layer that protrudes between the first and the second tool part.

30. The device for producing a component of at least a first layer and a second layer with a molding tool that defines the contour of the component to be produced according to claim 29, **characterized in that** the cutting device comprises an edge that faces the second tool part and is arranged on the third clamping frame element, wherein a projection of the supporting layer can be cut off angular to the supporting layer by means of said edge at the location, at which the supporting layer emerges from the second tool part, during a movement of the third clamping frame element.

31. The device for producing a component of at least a first layer and a second layer with a molding tool that defines the contour of the component to be produced according to claim 29, **characterized in that** the cutting device comprises at least one knife that can be moved by means of an actuator in order to cut off a projection of the supporting layer that protrudes between the first and the second tool part, wherein said knife features a cutting edge that faces the second tool part and cuts the second layer by means of pressure generated due to the actuating movement.

## Revendications

1. Procédé de fabrication d'une pièce par façonnage par pression d'une première couche de matériau et d'une deuxième couche de matériau, dans lequel est effectuée une liaison des deux couches à l'intérieur des contours de façonnage (13, 14) de deux parties d'outil (11, 12) par leur rapprochement, sachant que dans une position de départ, les première (11) et deuxième (12) parties d'outil sont éloignées l'une de l'autre,
comprenant les étapes suivantes :
(a) Déplacement d'un premier élément de cadre de serrage (21) et d'un deuxième élément de cadre de serrage (22) dans une position sortie l'un par rapport à l'autre et placement de la première couche (1) entre les deux parties d'outil et entre le premier et un troisième élément de cadre de serrage (23) disposé entre les premier et deuxième éléments de cadre de serrage, et placement de la deuxième couche (2) entre les deux parties d'outil et entre les deuxième (22) et troisième éléments de cadre de serrage (23), sachant que les premier, deuxième et troisième éléments de cadre de serrage est disposés hors du contour façonnant des parties d'outil,
(b) Rapprochement des premier (21), deuxième (22) et troisième (23) éléments de cadre de serrage dans une position dans laquelle les première (1) et deuxième (2) couches sont maintenues par le premier élément de cadre de serrage et le troisième élément de cadre de serrage respectivement le deuxième élément de cadre de serrage et le troisième élément de cadre de serrage,
(c) Rapprochement des parties d'outil l'une par rapport à l'autre par façonnage des première et deuxième couches au niveau des contours de façonnage (13, 14) des parties d'outil (11, 12),
(d) Eloignement des parties d'outil et des éléments de cadre de serrage pour pouvoir sortir de l'outil les première et deuxième couches reliées entre elles,
**caractérisé en ce qu'**à l'étape (b), les deuxième et troisième éléments de cadre de serrage sont déplacés dans une position relative l'un par rapport à l'autre, dans laquelle la première couche et/ou la deuxième couche (2) peuvent s'écouler postérieurement de manière prédéfinie lors du façonnage des couches ou un écoulement postérieur peut être évité et sachant que la première couche (1) est une couche de décoration et la deuxième couche (2) est une couche porteuse de la pièce à fabriquer ou la première couche (1) est une couche porteuse et la deuxième couche (2) est une couche de décoration de la pièce à fabriquer.

2. Procédé de fabrication d'une pièce à partir d'au moins une première couche et une deuxième couche selon la revendication 1, **caractérisé en ce que** lors du rapprochement des premier (21), deuxième (22) et troisième (23) éléments de cadre de serrage à l'étape (b), l'éloignement entre les premier (21 et troisième (23) éléments de serrage ainsi qu'entre les deuxième (22) et troisième (23) éléments de serrage est réglé via des écarteurs (41, 42).

3. Procédé de fabrication d'une pièce à partir d'au moins une première couche et une deuxième couche selon l'une des revendications précédentes, **caractérisé en ce que** lors du rapprochement des premier (21), deuxième (22) et troisième (23) éléments de cadre de serrage à l'étape (b), la position du troisième (23) élément de cadre de serrage est déterminée par rapport au premier élément de cadre de serrage par un premier élément d'écartement (45) qui est couplé avec la position de la deuxième partie d'outil.

4. Procédé de fabrication d'une pièce à partir d'au moins une première couche et une deuxième couche selon l'une des revendications précédentes, **caractérisé en ce qu'**à à l'étape (b), la position des éléments de cadre de serrage adopte une position dans laquelle tant le point de contour suivant du premier élément de cadre de serrage (21) en direction de la première partie d'outil (11) que le point de contour suivant du deuxième élément de cadre de serrage (22) en direction de la deuxième partie d'outil (12), est placé entre le point de contour suivant de la première partie d'outil (11) par rapport au premier élément de cadre de serrage (21) et le point de contour suivant du deuxième élément de cadre de serrage (22) par rapport au premier élément de cadre de serrage (21).

5. Procédé de fabrication d'une pièce à partir d'au moins une première couche et une deuxième couche selon l'une des revendications précédentes, **caractérisé en ce qu'**après la procédure de façonnage, une saillie de la deuxième couche (2) sortant entre les première (11) et deuxième (12) parties d'outil et/ou une saillie de la première couche (1) sortant entre les première (11) et deuxième (12) parties d'outil, est coupée via un dispositif de coupe.

6. Procédé de fabrication d'une pièce à partir d'au moins une première couche et une deuxième couche selon l'une des revendications précédentes, **caractérisé en ce qu'**avant le placement entre les parties d'outil et sur le deuxième élément de cadre de serrage (22), un réchauffement d'une ou des deux couche(s) (1, 2) est effectué.

7. Procédé de fabrication d'une pièce à partir d'au moins une première couche et une deuxième couche selon l'une des revendications précédentes, **caractérisé en ce que** la première (1) et/ou la deuxième (2) couche est/sont multicouches.

8. Procédé de fabrication d'une pièce à partir d'au moins une première couche et une deuxième couche selon la revendication précédente 7, **caractérisé en ce qu'**au moins la surface de la couche de décoration orientée vers la couche porteuse est fabriquée dans un tissu.

9. Procédé de fabrication d'une pièce à partir d'au moins une première couche et une deuxième couche selon la revendication précédente 8, **caractérisé en ce que** la surface de la couche de décoration est en non-tissé, en feutre, en tissu plat ou en tricot circulaire.

10. Procédé de fabrication d'une pièce à partir d'au moins une première couche et une deuxième couche selon l'une des revendications précédentes 8 à 10, **caractérisé en ce que** la couche de décoration est fabriquée en matériaux textiles, une mousse et un matériau non-tissé et/ou contient des composantes de mousse et/ou dans un tissu textile, un cuir synthétique-mousse, un film plastique ou un cuir.

11. Procédé de fabrication d'une pièce à partir d'au moins une première couche et une deuxième couche selon la revendication précédente 10, **caractérisé en ce que** la couche de décoration est en mousse de polypropylène ou une mousse PE ou une mousse à base de polyuréthane.

12. Procédé de fabrication d'une pièce à partir d'au moins une première couche et une deuxième couche selon l'une des revendications précédentes 8 à 11, **caractérisé en ce que** la couche porteuse est un plastique et/ou que la couche porteuse est en fibres naturelles, en fibres de verre, en fibres de plastique et/ou en fibres de polypropylène (PP).

13. Procédé de fabrication d'une pièce à partir d'au moins une première couche et une deuxième couche selon la revendication 12, **caractérisé en ce que** les fibres naturelles de la couche porteuse sont en lin ou en kénaf, en sisal ou en coton.

14. Procédé de fabrication d'une pièce par façonnage par pression d'une première couche de matériau et d'une deuxième couche de matériau, dans lequel est effectuée une liaison des deux couches à l'intérieur des contours de façonnage (13, 14) de deux parties d'outil (11, 12) par leur rapprochement, sachant que dans une position de départ, les première (11) et deuxième (12) parties d'outil sont éloignées l'une de l'autre, comprenant les étapes suivantes :
(a) Déplacement d'un premier élément de cadre de serrage (21) et d'un deuxième élément de cadre de serrage (22) dans une position sortie l'un par rapport à l'autre et placement de la première couche (1) entre les deux parties d'outil et entre le premier et un troisième élément de cadre de serrage (23) disposé entre les premier et deuxième éléments de cadre de serrage, et placement de la deuxième couche (2) entre les deux parties d'outil et entre les deuxième (22) et troisième éléments de cadre de serrage (23), sachant que les premier, deuxième et troisième éléments de cadre de serrage sont disposés hors du contour façonnant des parties d'outil,
(b) Rapprochement des premier (21), deuxième (22) et troisième (23) éléments de cadre de serrage dans une position dans laquelle les première (1) et deuxième (2) couches sont maintenues par le premier élément de cadre de serrage et le troisième élément de cadre de serrage respectivement le deuxième élément de cadre de serrage et le troisième élément de cadre de serrage,
(c) Rapprochement des parties d'outil l'une par rapport à l'autre par façonnage des première et deuxième couches au niveau des contours de façonnage (13, 14) des parties d'outil (11, 12),
(d) Eloignement des parties d'outil et des éléments de cadre de serrage pour pouvoir sortir de l'outil les première et deuxième couches reliées entre elles,
**caractérisé en ce qu'**à l'étape (b), les deuxième et troisième éléments de cadre de serrage sont déplacés dans une position relative l'un par rapport à l'autre, dans laquelle la deuxième couche (2) peut s'écouler postérieurement de manière prédéfinie lors du façonnage des couches ou un écoulement postérieur peut être évité et
que lors du rapprochement des premier (21), deuxième (22) et troisième (23) éléments de cadre de serrage à l'étape (b), l'éloignement entre les premier (21 et troisième (23) éléments de serrage ainsi qu'entre les deuxième (22) et troisième (23) éléments de serrage est réglé via des écarteurs (41, 42).

15. Procédé de fabrication d'une pièce à partir d'au moins une première couche et une deuxième couche selon la revendication précédente 14, **caractérisé en ce qu'**à l'étape (b), les deuxième et troisième éléments de cadre de serrage sont rapprochés dans une position relative l'un par rapport à l'autre, dans laquelle la première couche (1) peut s'écouler postérieurement de manière prédéfinie lors du façonnage des couches ou un écoulement postérieur peut être évité.

16. Procédé de fabrication d'une pièce à partir d'au moins une première couche et une deuxième couche selon l'une des revendications précédentes 14 à 15, **caractérisé en ce que** lors du rapprochement des premier (21), deuxième (22) et troisième (23) éléments de cadre de serrage à l'étape (b), la position du troisième élément de cadre de serrage est déterminée par rapport au premier élément de cadre de serrage par un premier élément d'écartement (45) qui est couplé avec la position de la deuxième partie d'outil.

17. Procédé de fabrication d'une pièce à partir d'au moins une première couche et une deuxième couche selon l'une des revendications précédentes 14 à 16, **caractérisé en ce qu'**à l'étape (b), la position des éléments de cadre de serrage adopte une position dans laquelle tant le point de contour suivant du premier élément de cadre de serrage (21) en direction de la première partie d'outil (11) que le point de contour suivant du deuxième élément de cadre de serrage (22) en direction de la deuxième partie d'outil (12) est placé entre le point de contour suivant de la première partie d'outil (11) par rapport au premier élément de cadre de serrage (21) et le point de contour suivant du deuxième élément de cadre de serrage (22) par rapport au premier élément de cadre de serrage (21).

18. Procédé de fabrication d'une pièce à partir d'au moins une première couche et une deuxième couche selon l'une des revendications précédentes 14 à 17, **caractérisé en ce qu'**après la procédure de façonnage, une saillie de la première couche (1) sortant entre les première (11) et deuxième (12) parties d'outil et/ou une saillie de la deuxième couche (2) sortant entre les première (11) et deuxième (12) parties d'outil est coupée via un dispositif de coupe.

19. Procédé de fabrication d'une pièce à partir d'au moins une première couche et une deuxième couche selon l'une des revendications précédentes 14 à 18, **caractérisé en ce qu'**avant le placement entre les parties d'outil et sur le deuxième élément de cadre de serrage (22), un réchauffement d'une ou des deux couche(s) (1, 2) est effectué.

20. Procédé de fabrication d'une pièce à partir d'au moins une première couche et une deuxième couche selon l'une des revendications précédentes 14 à 19, **caractérisé en ce que** la première (1) et/ou la deuxième (2) couche est/sont multicouches.

21. Procédé de fabrication d'une pièce à partir d'au moins une première couche et une deuxième couche selon l'une des revendications précédentes 14 à 20, **caractérisé en ce que** la première couche (1) est une couche de décoration et la deuxième couche (2) est une couche porteuse de la pièce à fabriquer ou la première couche (1) est une couche porteuse et la deuxième couche (2) est une couche de décoration de la pièce à fabriquer.

22. Procédé de fabrication d'une pièce à partir d'au moins une première couche et une deuxième couche selon la revendication 21, **caractérisé en ce qu'**au moins la surface de la couche de décoration orientée vers la couche porteuse est fabriquée dans un tissu et/ou que la surface de la couche de décoration est en non-tissé, en feutre, en tissu plat ou en tricot circulaire et/ou que la couche de décoration contient des composantes de mousse.

23. Procédé de fabrication d'une pièce à partir d'au moins une première couche et une deuxième couche selon l'une des revendications précédentes 21 à 22, **caractérisé en ce que** la couche de décoration est fabriquée dans un tissu textile, un cuir synthétique-mousse, un film plastique ou un cuir et/ou en matériaux textiles, une mousse et un matériau non-tissé et/ou une mousse de polypropylène ou une mousse PE ou une mousse à base de polyuréthane.

24. Procédé de fabrication d'une pièce à partir d'au moins une première couche et une deuxième couche selon l'une des revendications précédentes 14 à 23, **caractérisé en ce que** la couche porteuse est un plastique et/ou en fibres naturelles, en fibres de verre, en fibres de plastique et/ou en fibres de polypropylène (PP).

25. Procédé de fabrication d'une pièce à partir d'au moins une première couche et une deuxième couche selon la revendication 24, **caractérisé en ce que** les fibres naturelles de la couche porteuse sont en lin ou en kénaf, en sisal ou en coton.

26. Procédé de fabrication d'une pièce à partir d'au moins une première couche (1) et une deuxième (2) couche comprenant un outil de moulage définissant le contour de la pièce à fabriquer, comprenant au moins une première partie d'outil (11) tournée vers la première couche, avec un contour de façonnage tridimensionnel, et une deuxième partie d'outil (2) tournée vers la seconde couche, avec un contour de façonnage tridimensionnel, qui sont prétendues dans un formateur sous pression pour effectuer le façonnage de la première couche (1) et de la deuxième couche (2) ainsi que la liaison des deux couches entre elles par le rapprochement des première et deuxième parties d'outil, ainsi qu'un dispositif de cadres de serrage comprenant des éléments de cadre de serrage mobiles entre eux, pour maintenir les couches hors de la zone du contour de l'outil de manière prédéfinie pendant la procédure de façonnage,
le dispositif de cadres de serrage comprend :
- un premier élément de cadre de serrage (21) qui est mobile par rapport à la première partie d'outil via un premier dispositif de réglage (31),
- un deuxième élément de cadre de serrage (22) qui est mobile par rapport à la deuxième partie d'outil via un deuxième dispositif de réglage (32),
- un troisième élément de cadre de serrage (22) qui est mobile par rapport à la première ou la deuxième partie d'outil via un troisième dispositif de réglage (33) et qui est disposé entre les premier et deuxième éléments de cadre de serrage,
sachant que les premier, deuxième et troisième éléments de cadre de serrage sont ainsi disposés qu'un matériau pour la première couche (1) peut être placé entre le premier élément de cadre de serrage et le troisième élément de cadre de serrage et un matériau pour la deuxième couche (w) peut être placé entre le deuxième élément de cadre de serrage et le troisième élément de cadre de serrage, de telle sorte que les couches (1, 2) puissent être maintenues séparées l'une de l'autre via le troisième élément de cadre de serrage, **caractérisé en ce que**
des écarteurs (41, 42) sont disposés sur le troisième élément de cadre de serrage, avec lesquels l'écart minimal entre les premier et troisième ainsi qu'entre les deuxième et troisième éléments de cadre de serrage est prédéfini.

27. Procédé de fabrication d'une pièce à partir d'au moins une première couche et une deuxième couche comprenant un outil de moulage définissant le contour de la pièce à fabriquer selon la revendication 26, **caractérisé en ce que** les écarteurs (41, 42) sont réglables.

28. Procédé de fabrication d'une pièce à partir d'au moins une première couche et une deuxième couche comprenant un outil de moulage définissant le contour de la pièce à fabriquer selon l'une des revendication 25 à 27, **caractérisé en ce qu'**un dispositif de coupe pour couper une saillie de la première couche sortant entre les première et deuxième parties d'outil est disposé sur le premier élément de cadre.

29. Procédé de fabrication d'une pièce à partir d'au moins une première couche et une deuxième couche comprenant un outil de moulage définissant le contour de la pièce à fabriquer selon l'une des revendications 25 à 28, **caractérisé en ce qu'**un dispositif de coupe pour couper une saillie de la deuxième couche sortant entre les première et deuxième parties d'outil est disposé sur le troisième élément de cadre.

30. Procédé de fabrication d'une pièce à partir d'au moins une première couche et une deuxième couche comprenant un outil de moulage définissant le contour de la pièce à fabriquer selon la revendication 29, **caractérisé en ce que** le dispositif de coupe comprend une arête disposée sur le troisième élément de cadre de serrage et tournée vers la deuxième partie d'outil, avec laquelle, lors d'un mouvement du troisième élément de cadre de serrage en angle par rapport à la couche porteuse au point de sortie de celle-ci sur la deuxième partie d'outil, une saillie de la couche porteuse peut être coupée.

31. Procédé de fabrication d'une pièce à partir d'au moins une première couche et une deuxième couche comprenant un outil de moulage définissant le contour de la pièce à fabriquer selon la revendication 29, **caractérisé en ce que** le dispositif de coupe comprend au moins une lame mobile via un dispositif de réglage pour couper une saillie de la couche porteuse sortant entre les première et deuxième parties d'outil, laquelle présente une arête de coupe tournée vers la deuxième partie d'outil et coupe la deuxième couche par de la pression amenée par le mouvement de réglage.
